# EUROPEAN PATENT SPECIFICATION

(11) **EP 2 861 673 B1**
(45) Date of publication and mention of the grant of the patent: **09.08.2023**
(21) Application number: 13728392.5
(22) Date of filing: 13.06.2013
(51) Int. Cl.: C09B 67/22, C09B 62/44, C09D 11/00, C09B 62/513, D06P 3/66, D06P 1/382, D06P 1/384

(54) **METAL FREE REACTIVE DYES, PROCESS FOR THE PRODUCTION THEREOF AND THEIR USE**
METALLFREIE REAKTIVE FARBSTOFFE, VERFAHREN ZU DEREN HERSTELLUNG UND DEREN VERWENDUNG
COLORANTS RÉACTIFS EXEMPTS DE MÉTAUX, LEUR PROCÉDÉ DE PRODUCTION ET LEUR UTILISATION

(30) Priority: 18.06.2012 EP 12004553
(43) Date of publication of application: 22.04.2015
(73) Proprietor: DyStar Colours Distribution GmbH, 65479 Raunheim (DE)
(72) Inventor: HAN, Yuan, Singapore 640847 (SG); KIM, Hyeong, Kyu, Singapore 650269 (SG); BARBIERU, Roxana, Singapore 117468 (SG)
(86) International application number: PCT/EP2013/062201
(87) International publication number: WO 2013/189817

(56) References cited:
- WO-A1-03/033599
- WO-A1-03/040239
- WO-A1-2010/057830
- US-A- 5 817 779

## Description

The present invention relates to the technical field of reactive dyestuffs for dyeing and printing of hydroxyl-, amino-, and/or carboxamido-containing material.

Metal free reactive dyes are known from prior art and can be used as colorants in different applications, see for example US 5 817 779, CH 695613 A5, WO 2010/057830 and WO 2003/033599.

However, in the context of the dyeing and printing of hydroxyl-, amino- and/or carboxamido-containing material the known dyes that are metal free have a number of technical disadvantages such as unsatisfactory light fastness and especially limitations in achieving darker shades such as dark brown, violet, navy and black.

Surprisingly, it has now been found that the dyes of the formula (I) as described below show highly advantageous properties over the known dyes. These trisazo or tetrakisazo dyes could build-up to darker shades with excellent light fastness and good overall fastness properties on the materials mentioned above and on blends containing them. Most importantly, dyes of formula (I) are metal free and thus superior in ecological performance and provide dyeings that are of very good levelness. The present invention does not include bisazo dyes.

The present invention refers to dyes of the formula (I) and mixtures thereof 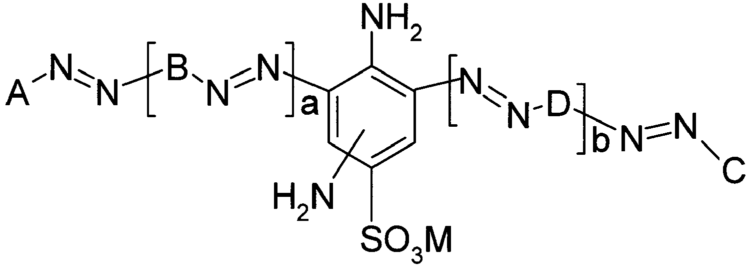 wherein,
each of A and C, independent of each other is a radical of general formula (1a) 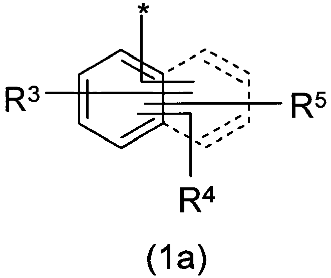
wherein,
each of R³ to R⁵, independent of each other is hydrogen, halogen, straight-chain or branched alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, unsubstituted or substituted aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a), (2b) or (2c) 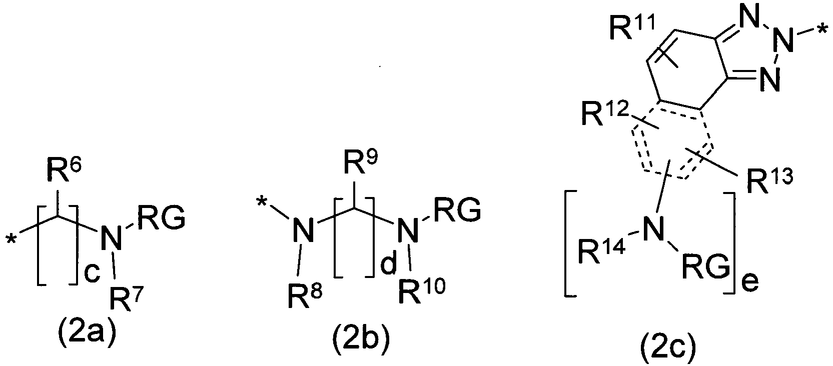
wherein,
each of R⁶ and R⁹, independent of each other is hydrogen, halogen, straight-chain or branched alkyl, N-acylamino, alkoxy, thioalkoxy, hydroxy, cyano, alkoxycarbonyl, alkoxythiocarbonyl, acyl, thioacyl, aryloyl, trifluoromethyl, acyloxy, aryloyloxy, cycloalkyl, unsubstituted or substituted aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
each of R⁷, R⁸, R¹⁰ and R¹⁴, independent of each other is hydrogen, straight-chain or branched alkyl, cycloalkyl or unsubstituted or substituted aryl; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
each of R¹¹ to R¹³, independent of each other is hydrogen, halogen, alkyl, alkoxy or SO₃M; and
c is an integer of 0 to 6; and
d is an integer of 1 to 6; and
when each of c and d, independent of each other is ≥ 2, R⁶ and R⁹ can have different meanings within the same rest as per meaning above defined; and
e is 0 or 1; and
RG is a reactive anchor of general formula (3a), (3b) or (3c); 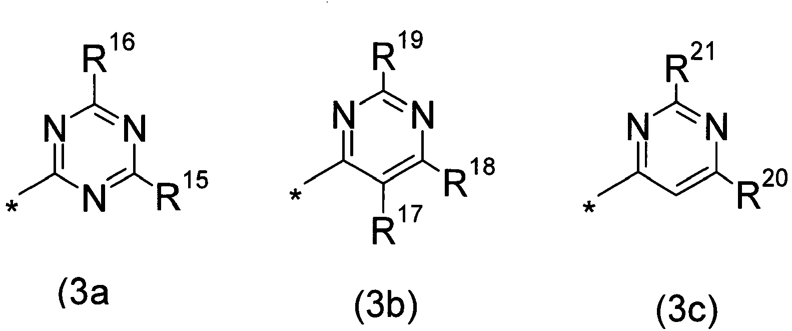
wherein,
each of R¹⁶ to R²¹, independent of each other is halogen; and
R¹⁶ can additionally be a rest of formula (4a) 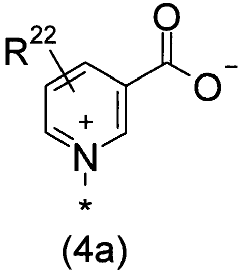
wherein,
R²² is hydrogen, halogen, straight-chain or branched alkyl, alkoxy, thioalkoxy, hydroxy, cycloalkyl, unsubstututed or substituted aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
R¹⁵ is one of the groups selected from general formula (5a) or (5b); 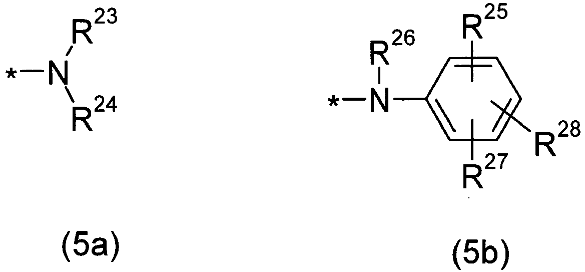
wherein,
each of R²³, R²⁴ and R²⁶, independent of each other is hydrogen, straight-chain or branched alkyl, cycloalkyl or unsubstituted or substituted aryl; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
each of R²⁵, R²⁷ and R²⁸, independent of each other is hydrogen, halogen, straight-chain or branched alkyl, N-acylamino, alkoxy, thioalkoxy, hydroxy, cyano, alkoxycarbonyl, alkoxythiocarbonyl, acyl, thioacyl, aryloyl, sulfamoyl, trifluoromethyl, acyloxy, aryloyloxy, cycloalkyl, unsubstituted or substituted aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
R²⁴ can additionally be -CH₂CH₂-SO₂-X, where X is vinyl or a radical -CH₂CH₂-Y where Y is a group removable under alkaline conditions such as OSO₃M, SSO₃M, OCOCH₃, OPO₃M or halogen; and
R²⁸ can additionally be -SO₂-X where X is the same as defined above;
each of B and D, independent of each other is a radical of general formula (6a) 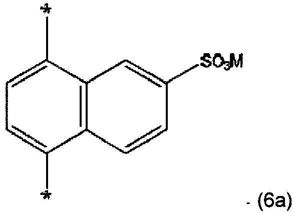
wherein,
each of a and b, independent of each other is an integer of 0 or 1 with the general proviso that a + b is not 0 and dyes of general formula (I) contain at least one reactive anchor and
M is hydrogen, lithium, sodium, potassium, ammonium or mono-, di-, tri- or tetra-(C₁-C₄)-alkylammonium, one equivalent of an alkali earth metal, or a monovalent organic cation.

This invention refers to all kinds of tautomeric and geometric isomers of the dyes of the formula (I).

Alkyl groups appearing in this application may be straight-chain or branched and are (C₁-C₁₂)-alkyl groups, preferably (C₁-C₈)-alkyl groups, for example n-butyl, isobutyl, n-pentyl, isopentyl, n-hexyl, 2-ethylhexyl, sec-butyl, tert-butyl and methylbutyl.

The same logic applies to alkoxy groups which accordingly are preferably (C₁-C₈)-alkoxy, for example methoxy and ethoxy, to thioalkoxy groups, which are preferably (C₁-C₈)-thioalkoxy, for example -SCH₃ or -SC₂H₅.

Cycloalkyl groups are preferably (C₃-C₈)-cycloalkyl and especially preferably cyclopentyl and cyclohexyl. The term cyloalkyl comprises for the purpose of the present application substituted cycloalklyl groups and unsatured cycloalkyl groups as well. A preferred group of this type is cyclopentenyl. Preferred substituents are alkyl, hydroxyalkyl, halogen, hydroxyl, alkoxy, acyl, cyano, nitro, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, ureido, aminosulfonylamino, alkoxycarbonyl and acyloxy.

Aryl groups appearing in this application are preferably phenyl or naphthyl. The terms phenyl and naphthyl comprises unsubstituted as well as substituted phenyl and naphthyl. Preferred substituents are alkyl, cycloalkyl, heterocycloalkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, ureido, aminosulfonylamino, alkoxycarbonyl or acyloxy.

Heteroaryl groups appearing in this application are preferably pyridine, pyrimidine, pyridazine, pyrazine, pyrrole, imidazole, pyrazole, 1,2,4-thiadiazole, 1,2,4-triazole, tetrazole, thiophene, thiazole, isothiazole, benzothiazole, benzoisothiazole, 1,3,4-thiadiazole, furane, oxazole, benzoxazole or isoxazole. The terms heteroayl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, ureido, aminosulfonylamino, alkoxycarbonyl and acyloxy.

Heterocycloalkyl groups are preferably pyrrolidine, piperidine, morpholine, tetrahydrofuran or piperazine. The terms heterocycloalkyl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, aminocarbonylamino, aminosulfonylamino, alkoxycarbonyl and acyloxy.

Halogen is preferably chlorine, bromine or fluorine.

M is preferably hydrogen, lithium, sodium, or potassium

A group removable under alkaline conditions (Y) is a group, which will leave the molecule under alkaline conditions to yield the vinyl sulfone function. Examples of such groups are OSO₃M, SSO₃M, OCOCH₃, OPO₃M and halogen.

Particular preferred embodiments of the present invention are dyes of the formula (Ia) and mixtures thereof: 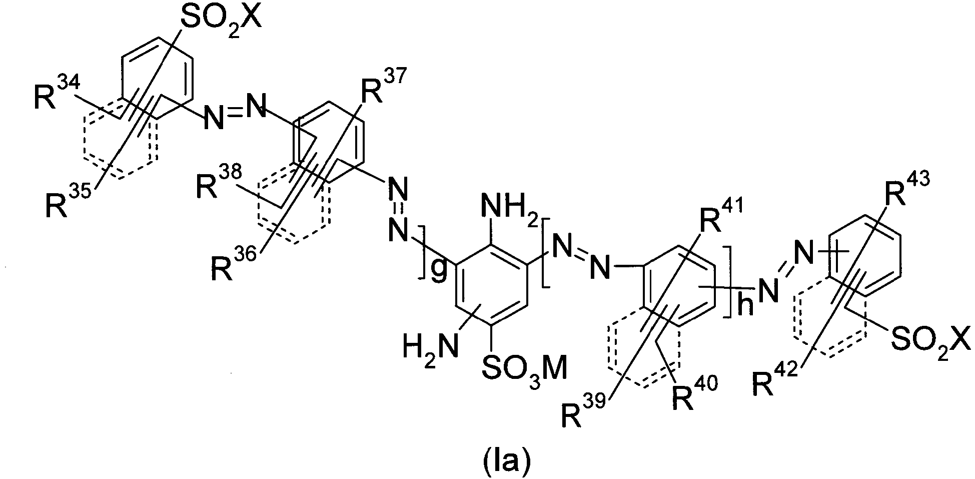 wherein, 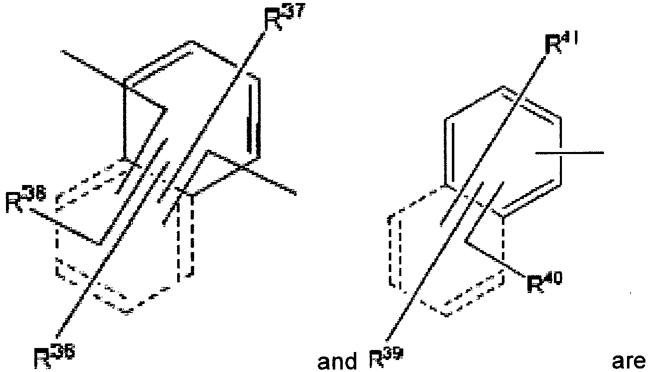 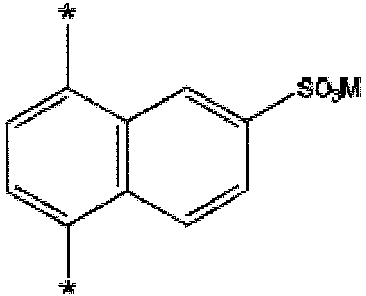
each of R³⁴, R³⁵, R⁴² and R⁴³, independent of each other is hydrogen, halogen, straight-chain or branched alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, unsubstituted or substituted aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy.
X and M are the same as defined above and
each of g and h, independent of each other is an integer of 0 or 1 with the general proviso that g + h is not 0.

In especially preferred dyes of general formula (Ia),
each of R³⁴ to R⁴³, independent of each other is hydrogen, straight-chain or branched (C₁-C₄)alkyl, (C₁-C₄)alkoxy, halogen, acyl, N-acylamino or SO₃M.

Further preferred embodiments of this invention are dyes of general formula (Ib) and mixtures thereof: 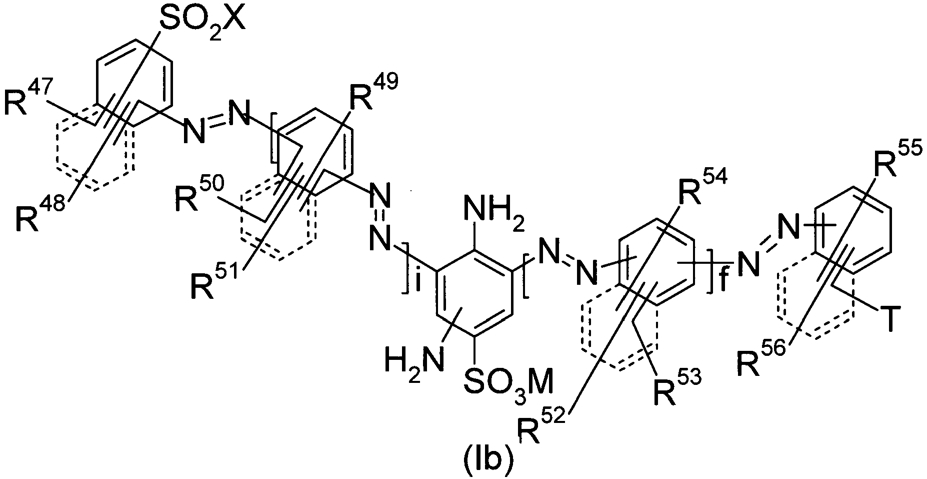 wherein, 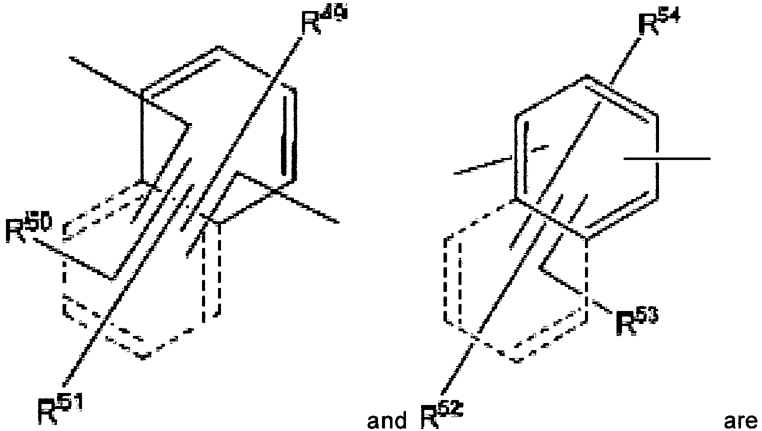 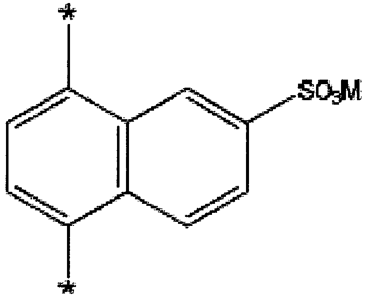
each of R⁴⁷, R⁴⁸, R⁵⁵ and R⁵⁶, independent of each other is hydrogen, halogen, straight-chain or branched alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, unsubstituted or substituted aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy.
T is a rest of general formula (2a) or (2b), where (2a) and (2b) are the same as defined above; or
is a group of general formula (9a) 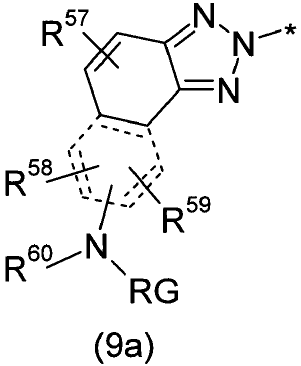
wherein,
each of R⁵⁷ to R⁵⁹, independent of ach other is hydrogen, halogen, straight-chain or branched alkyl, alkoxy or SO₃M; and
R⁶⁰ is hydrogen, straight-chain or branched alkyl, cycloalkyl or unsubstituted or substituted aryl; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
RG is the same as defined above,
X and M are the same as defined above and each of i and f, independent of each other is an integer of 0 or 1 with the general proviso that i + f is not 0.

In especially preferred dyes of general formula (Ib),
each of R⁴⁷ to R⁵⁶, independent of each other is hydrogen, straight-chain or branched (C₁-C₄)alkyl, (C₁-C₄)alkoxy, halogen, acyl, N-acylamino or SO₃M.
T is -NH-RG, where RG is the same as defined above; or
is -(CH₂)ⱼ-NH-RG, where j is an integer of 1 to 3 and RG is the same as defined above; or
is a group of general formula (9a), where each of R⁵⁷ to R⁵⁹, independent of each other is hydrogen, alkyl or SO₃M and R⁶⁰ is hydrogen or alkyl.

Further preferred embodiments of this invention are dyes of general formula (Id) and mixtures thereof: 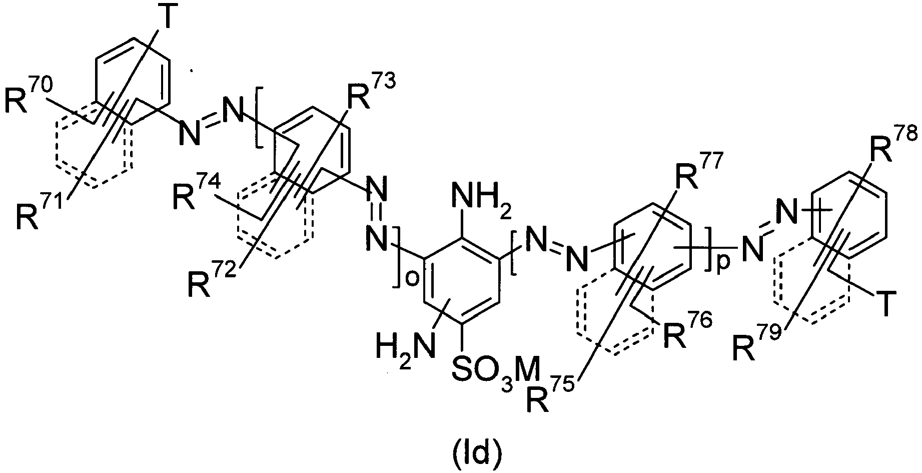 wherein, 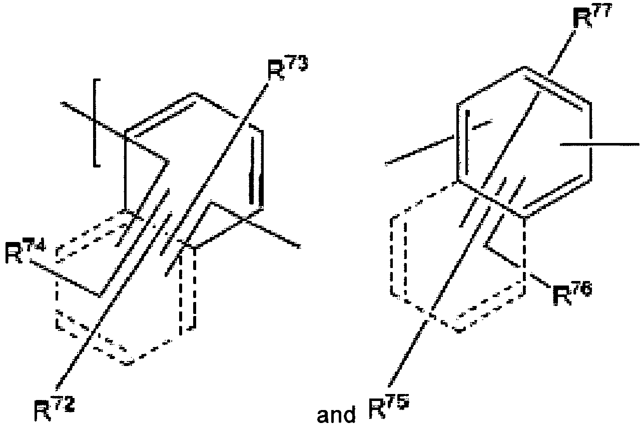 are 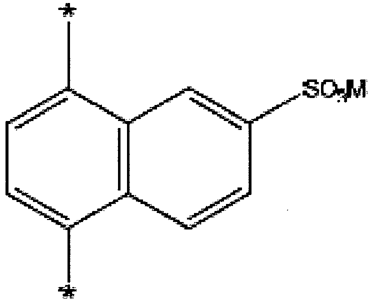
each of R⁷⁰, R⁷¹, R⁷⁸ and R⁷⁹, independent of each other is hydrogen, halogen, straight-chain or branched alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, unsubstituted or substituted aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy,
T is a rest of general formula (2a), (2b) or (9a), where (2a), (2b) and (9a) are the same as defined above,
M is the same as defined above,
each of o and p, independent of each other is an integer of 0 or 1 with the general proviso that o + p is not 0.

In especially preferred dyes of general formula (Id),
each of R⁷⁰ to R⁷⁹, independent of each other is hydrogen, straight-chain or branched (C₁-C₄)alkyl, (C₁-C₄)alkoxy, halogen, acyl, N-acylamino or SO₃M,
T is -NH-RG, where RG is the same as defined above; or
is -(CH₂)_{q}-NH-RG, where q is an integer of 1 to 3 and RG is the same as defined above; or
is a group of general formula (9a), where each of R⁵⁷ to R⁵⁹, independent of each other is hydrogen, straight-chain or branched alkyl or SO₃M and R⁶⁰ is hydrogen or straight-chain or branched alkyl.

Examples of preferred dyes of the formulae (Ia) to (Id) are the compounds I¹ to I¹⁵⁹ listed in the table 1 below and having the general formula (I').

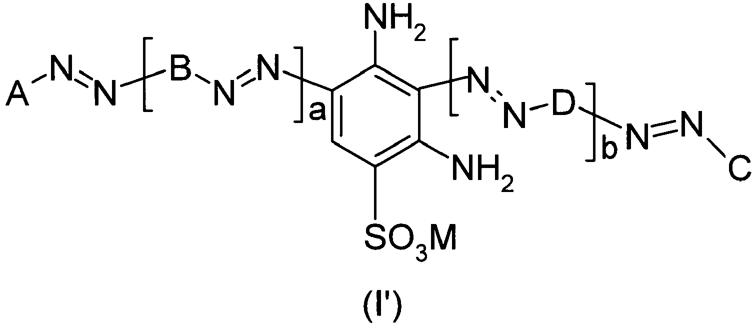

**Table 1**

| Serial number | A | B | C | D |
|---|---|---|---|---|
| I¹ | 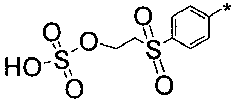 | 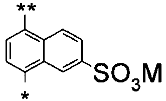 | 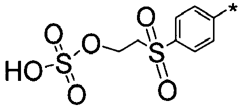 | - |
| I² | 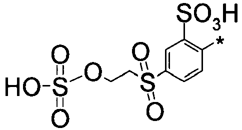 | 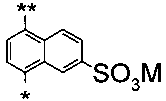 | 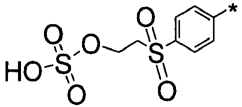 | - |
| I³ | 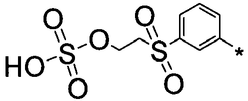 | 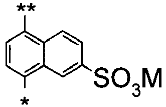 | 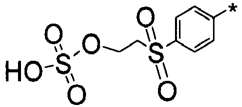 | - |
| I⁴ | 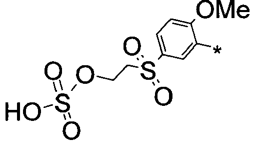 | 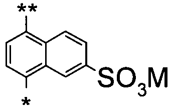 | 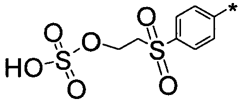 | - |
| I⁵ | 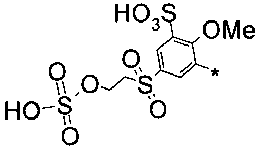 | 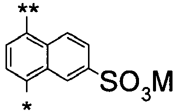 | 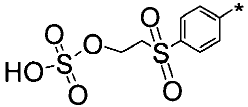 | - |
| I⁶ | 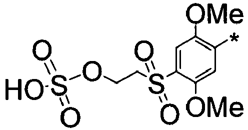 | 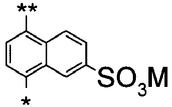 | 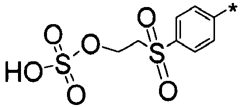 | - |
| I⁷ | 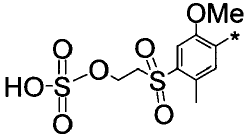 | 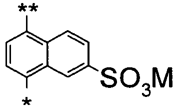 | 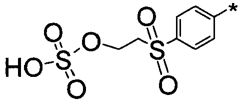 | - |
| I⁸ | 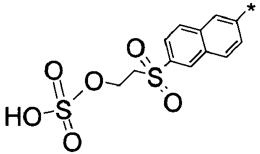 | 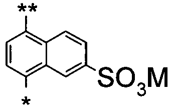 | 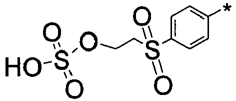 | - |
| I⁹ | 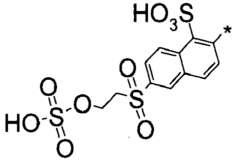 | 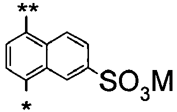 | 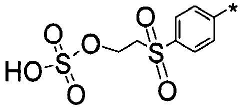 | - |
| I¹⁰ | 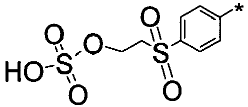 | 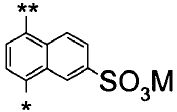 | 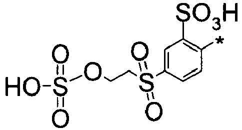 | - |
| I¹¹ | 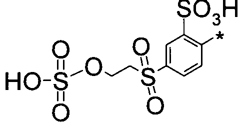 | 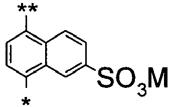 | 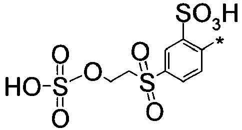 | - |
| I¹² | 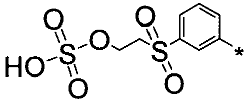 | 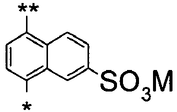 | 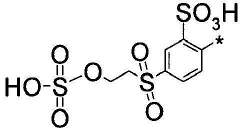 | - |
| I¹³ | 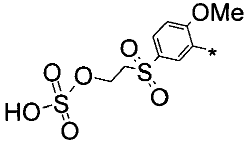 | 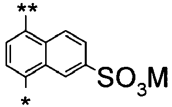 | 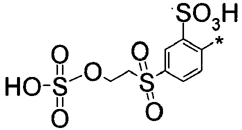 | - |
| I¹⁴ | 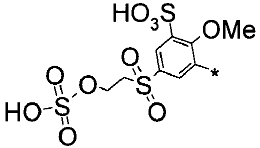 | 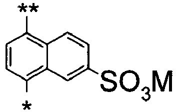 | 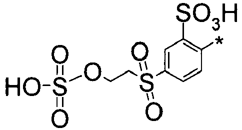 | - |
| I¹⁵ | 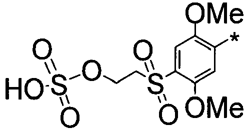 | 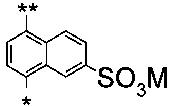 | 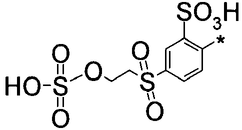 | - |
| I¹⁶ | 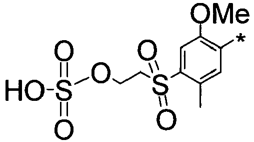 | 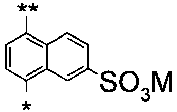 | 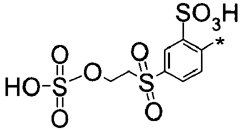 | - |
| I¹⁷ | 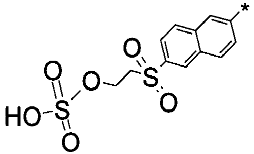 | 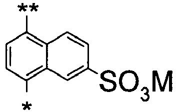 | 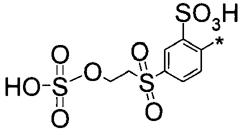 | - |
| I¹⁸ | 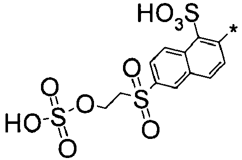 | 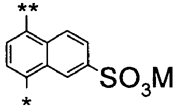 | 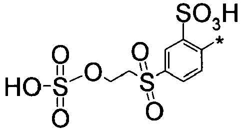 | - |
| I¹⁹ | 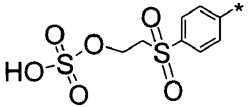 | 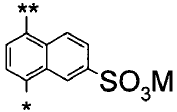 | 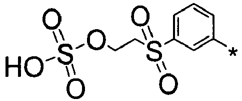 | - |
| I²⁰ | 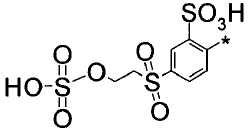 | 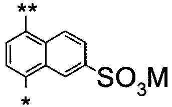 | 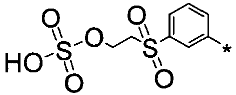 | - |
| I²¹ | 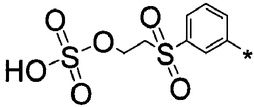 | 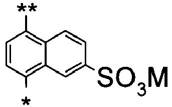 | 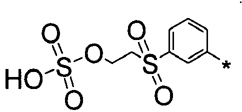 | - |
| I²² | 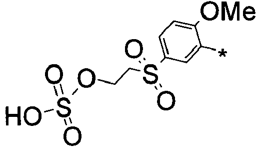 | 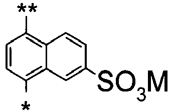 | 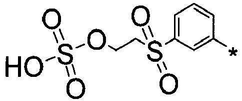 | - |
| I²³ | 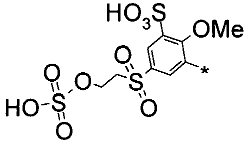 | 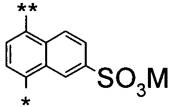 | 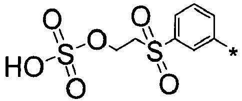 | - |
| I²⁴ | 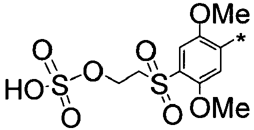 | 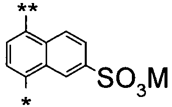 | 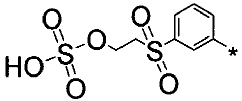 | - |
| I²⁵ | 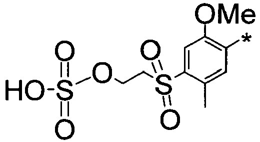 | 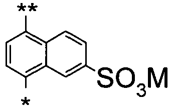 | 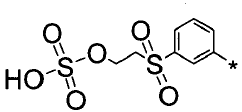 | - |
| I²⁶ | 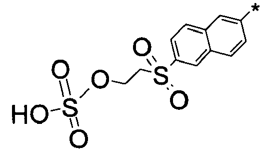 | 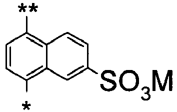 | 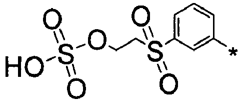 | - |
| I²⁷ | 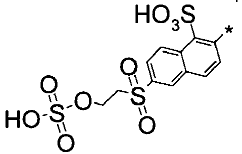 | 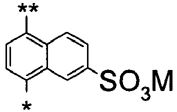 | 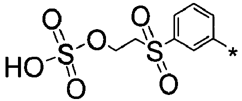 | - |
| I²⁸ | 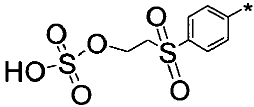 | 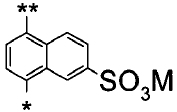 | 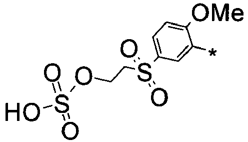 | - |
| I²⁹ | 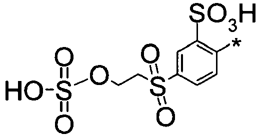 | 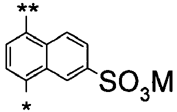 | 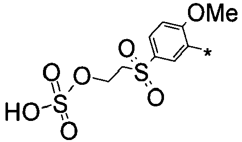 | - |
| I³⁰ | 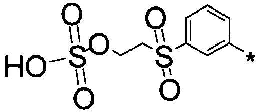 | 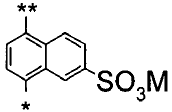 | 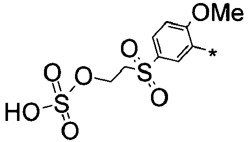 | - |
| I³¹ | 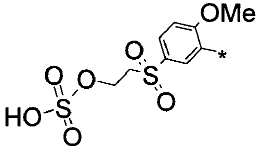 | 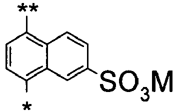 | 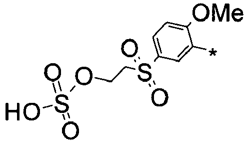 | - |
| I³² | 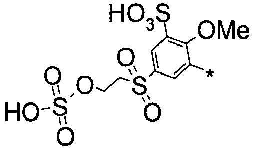 | 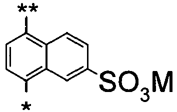 | 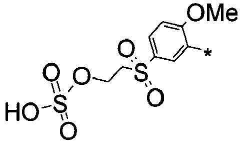 | - |
| I³³ | 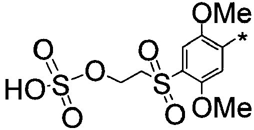 | 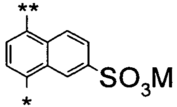 | 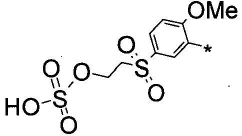 | - |
| I³⁴ | 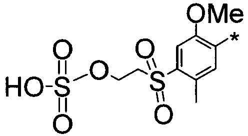 | 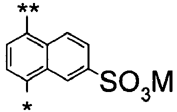 | 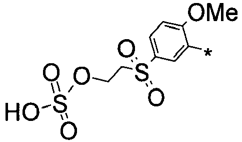 | - |
| I³⁵ | 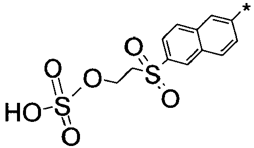 | 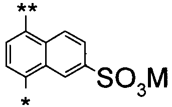 | 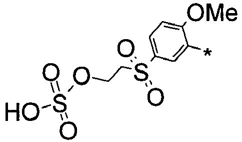 | - |
| I³⁶ | 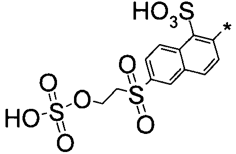 | 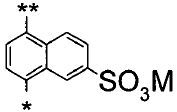 | 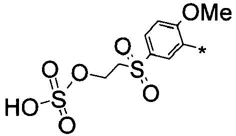 | - |
| I³⁷ | 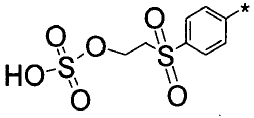 | 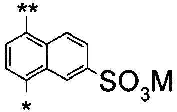 | 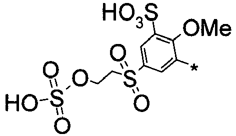 | - |
| I³⁸ | 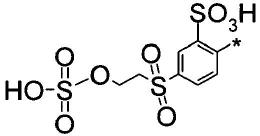 | 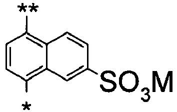 | 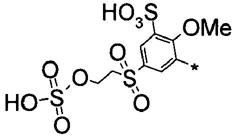 | - |
| I³⁹ | 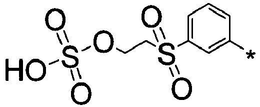 | 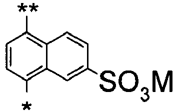 | 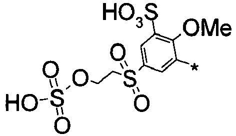 | - |
| I⁴⁰ | 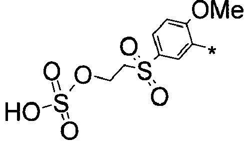 | 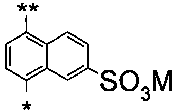 | 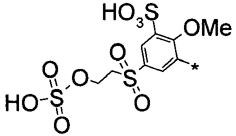 | - |
| I⁴¹ | 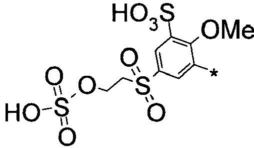 | 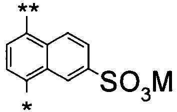 | 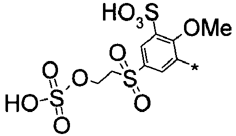 | - |
| I⁴² | 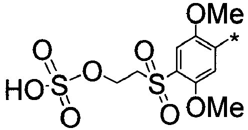 | 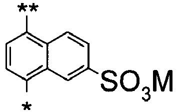 | 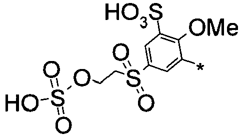 | - |
| I⁴³ | 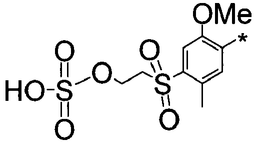 | 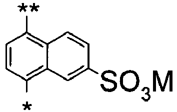 | 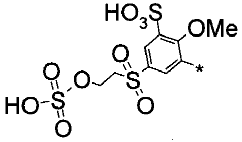 | - |
| I⁴⁴ | 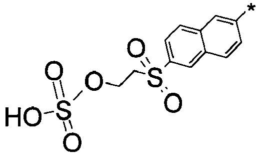 | 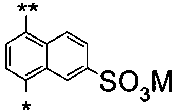 | 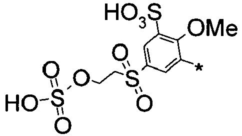 | - |
| I⁴⁵ | 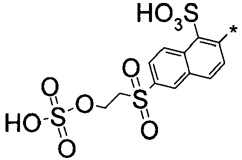 | 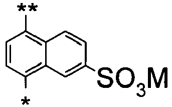 | 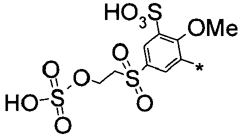 | - |
| I⁴⁶ | 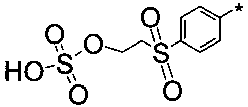 | 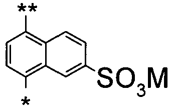 | 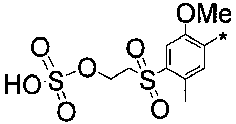 | - |
| I⁴⁷ | 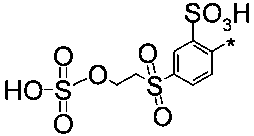 | 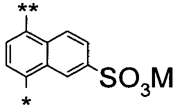 | 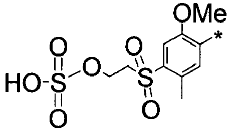 | - |
| I⁴⁸ | 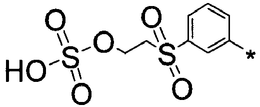 | 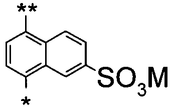 | 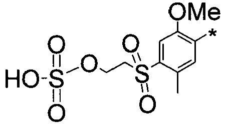 | - |
| I⁴⁹ | 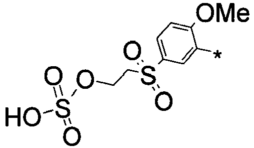 | 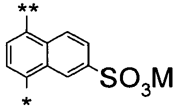 | 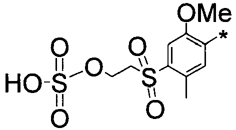 | - |
| I⁵⁰ | 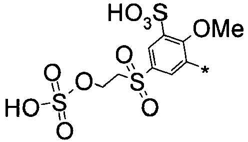 | 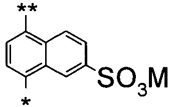 | 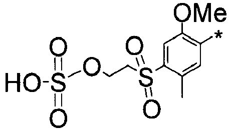 | - |
| I⁵¹ | 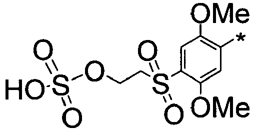 | 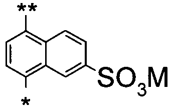 | 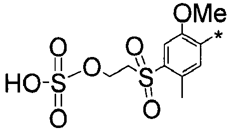 | - |
| I⁵² | 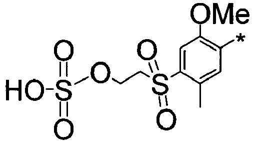 | 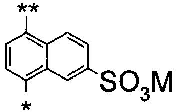 | 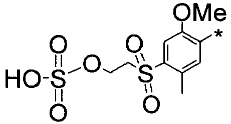 | - |
| I⁵³ | 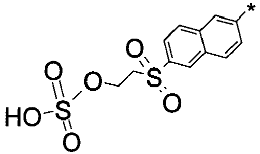 | 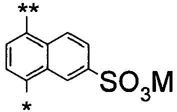 | 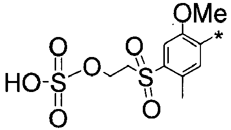 | - |
| I⁵⁴ | 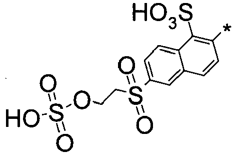 | 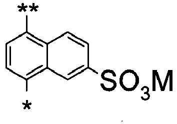 | 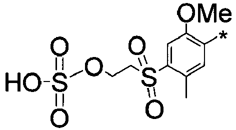 | - |
| I⁵⁵ | 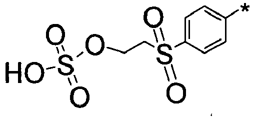 | 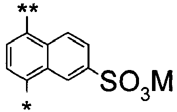 | 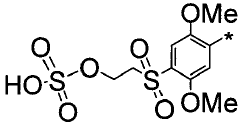 | - |
| I⁵⁶ | 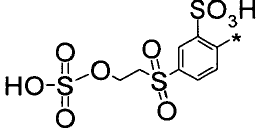 | 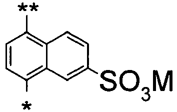 | 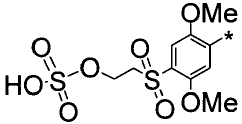 | - |
| I⁵⁷ | 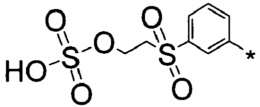 | 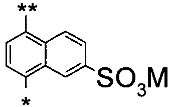 | 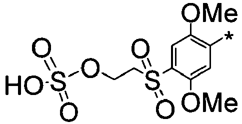 | - |
| I⁵⁸ | 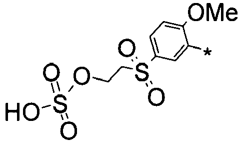 | 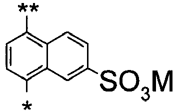 | 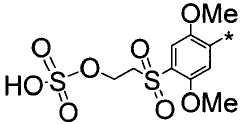 | - |
| I⁵⁹ | 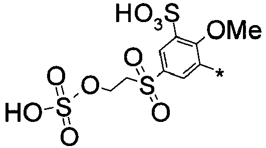 | 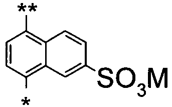 | 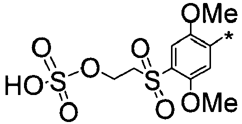 | - |
| I⁶⁰ | 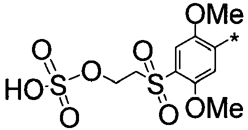 | 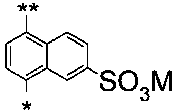 | 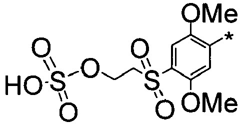 | - |
| I⁶¹ | 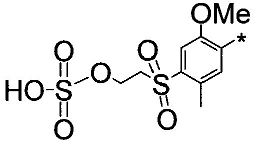 | 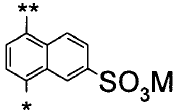 | 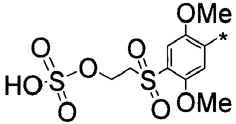 | - |
| I⁶² | 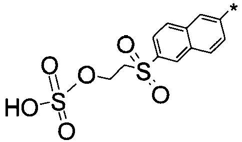 | 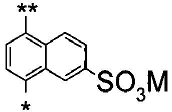 | 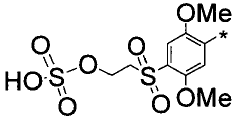 | - |
| I⁶³ | 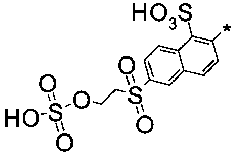 | 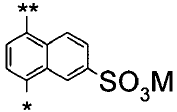 | 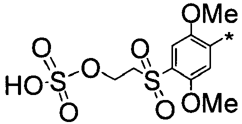 | - |
| I⁶⁴ | 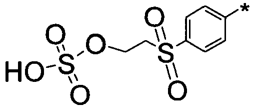 | 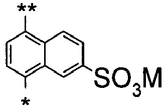 | 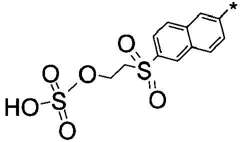 | - |
| I⁶⁵ | 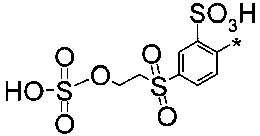 | 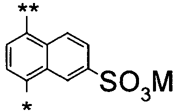 | 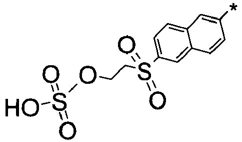 | - |
| I⁶⁶ | 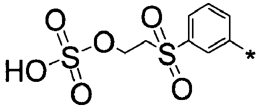 | 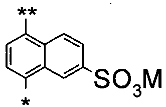 | 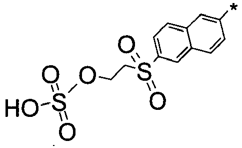 | - |
| I⁶⁷ | 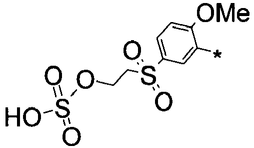 | 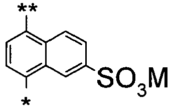 | 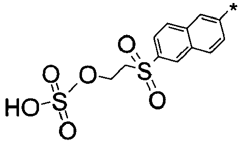 | - |
| I⁶⁸ | 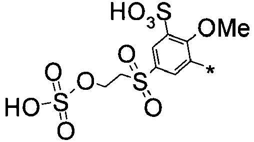 | 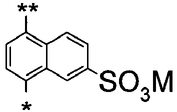 | 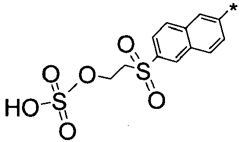 | - |
| I⁶⁹ | 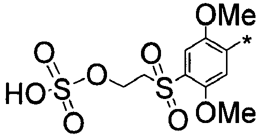 | 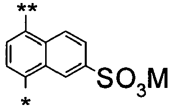 | 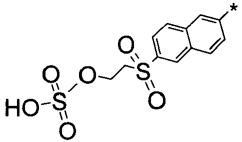 | - |
| I⁷⁰ | 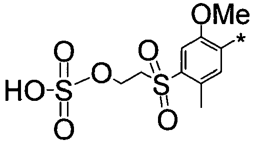 | 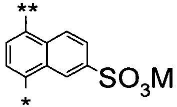 | 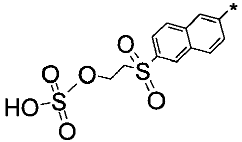 | - |
| I⁷¹ | 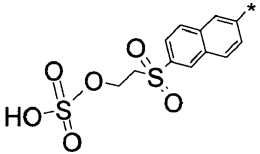 | 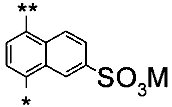 | 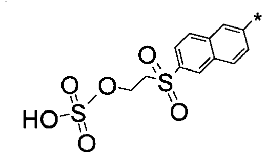 | - |
| I⁷² | 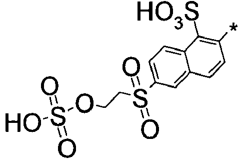 | 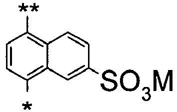 | 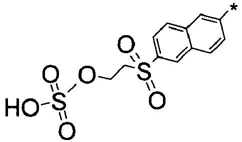 | - |
| I⁷³ | 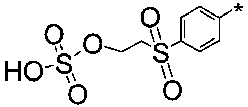 | 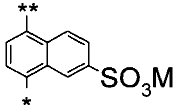 | 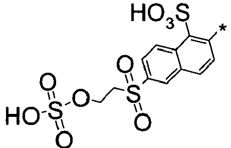 | - |
| I⁷⁴ | 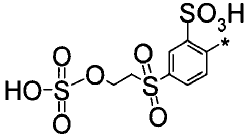 | 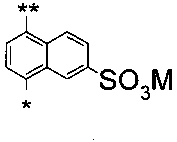 | 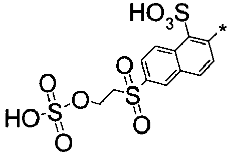 | - |
| I⁷⁵ | 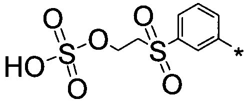 | 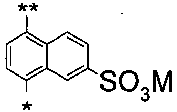 | 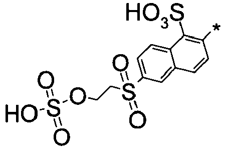 | - |
| I⁷⁶ | 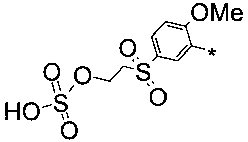 | 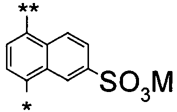 | 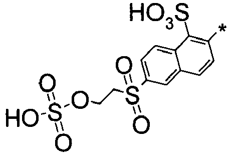 | - |
| I⁷⁷ | 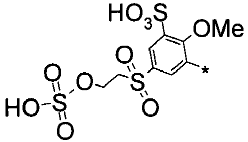 | 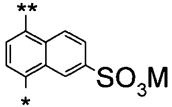 | 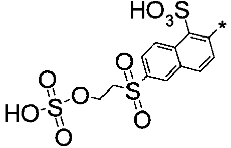 | - |
| I⁷⁸ | 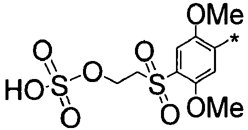 | 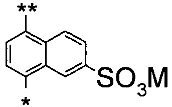 | 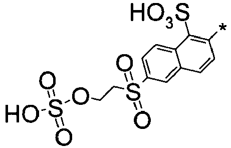 | - |
| I⁷⁹ | 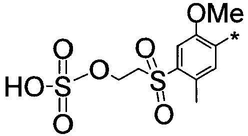 | 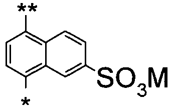 | 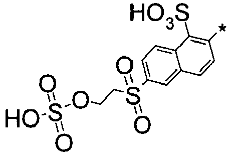 | - |
| I⁸⁰ | 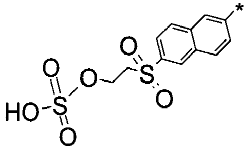 | 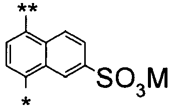 | 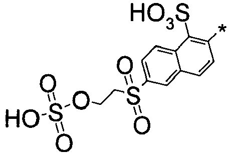 | - |
| I⁸¹ | 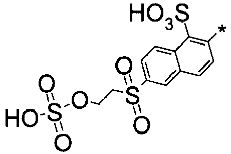 | 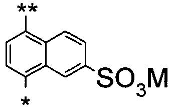 | 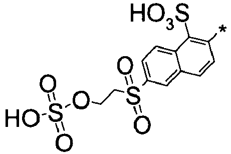 | - |
| I⁸² | 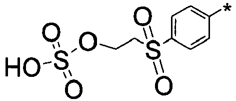 | 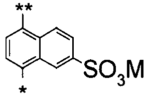 | 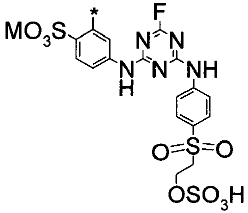 | - |
| I⁸³ | 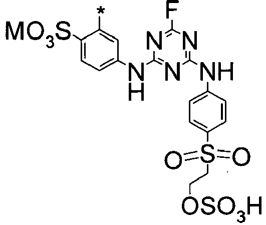 | 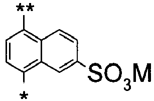 | 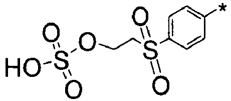 | - |
| I⁸⁴ | 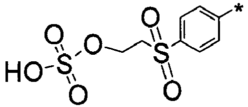 | 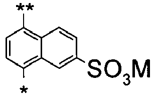 | 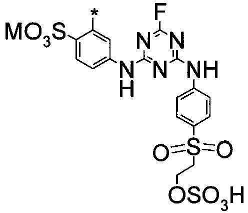 | - |
| I⁸⁵ | 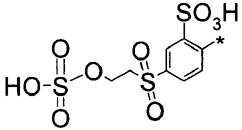 | 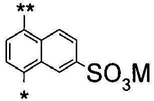 | 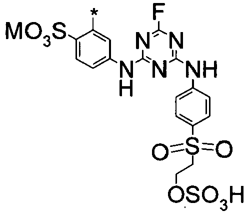 | - |
| I⁸⁶ | 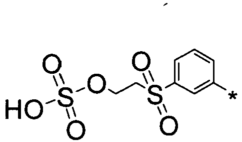 | 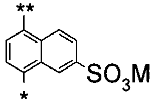 | 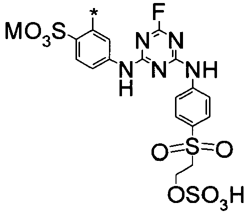 | - |
| I⁸⁷ | 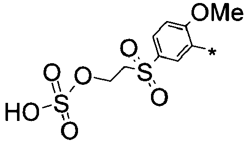 | 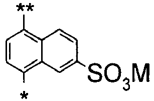 | 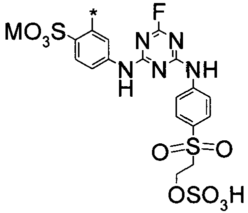 | - |
| I⁸⁸ | 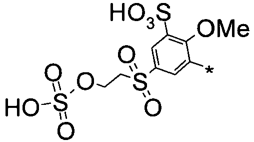 | 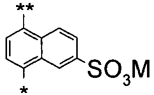 | 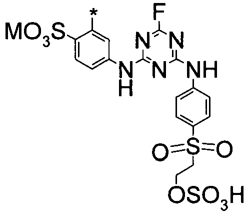 | - |
| I⁸⁹ | 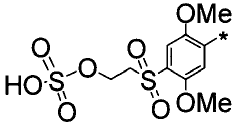 | 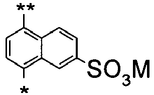 | 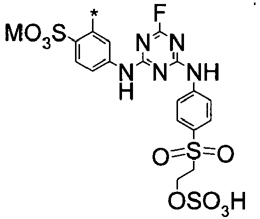 | - |
| I⁹⁰ | 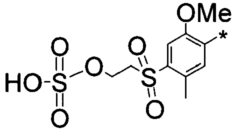 | 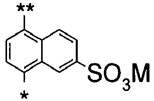 | 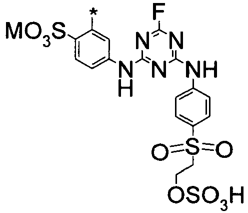 | - |
| I⁹¹ | 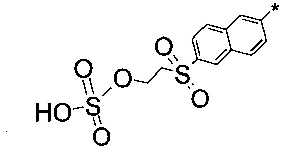 | 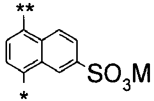 | 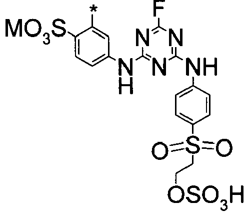 | - |
| I⁹² | 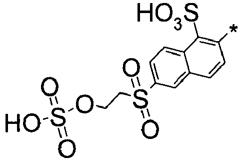 | 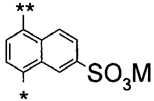 | 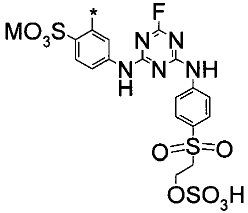 | - |
| I⁹³ | 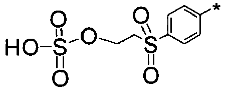 | 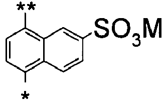 | 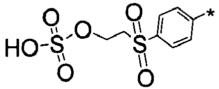 | - |
| I⁹⁴ | 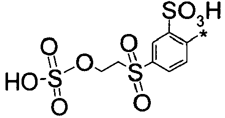 | 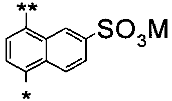 | 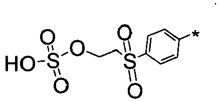 | - |
| I⁹⁵ | 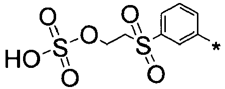 | 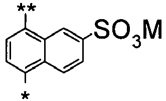 | 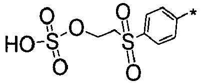 | - |
| I⁹⁶ | 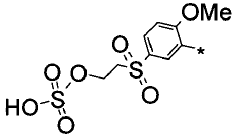 | 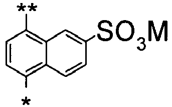 | 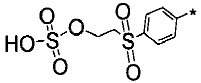 | - |
| I⁹⁷ | 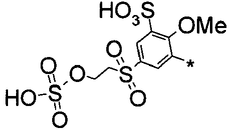 | 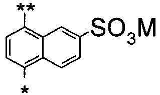 | 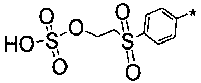 | - |
| I⁹⁸ | 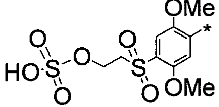 | 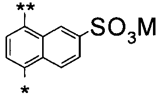 | 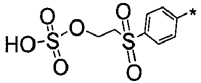 | - |
| I⁹⁹ | 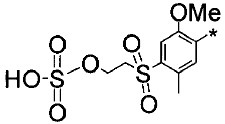 | 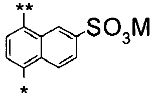 | 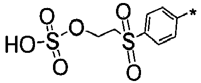 | - |
| I¹⁰⁰ | 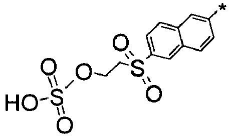 | 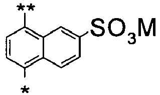 | 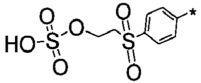 | - |
| I¹⁰¹ | 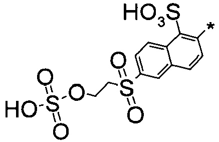 | 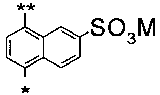 | 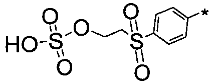 | - |

| | | | | |
|---|---|---|---|---|
| * refers to the attachment point of A and of C; * refers to the attachment point of B with A and ** refers to the other attachment point of B when a is 1; * refers to the attachment point of D with C and ** refers to the other attachment point of D when b is 1. | | | | |

Further examples of preferred dyes of the formulae (Ia) to (Ii) are the compounds I¹⁰¹ to I²²⁰ listed in the table 2 below and having the general formula (I").

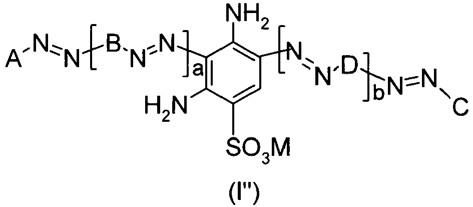

**Table 2**

| Serial number | A | B | C | D |
|---|---|---|---|---|
| I¹⁰² | 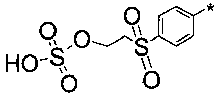 | 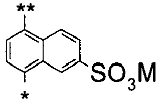 | 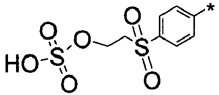 | - |
| I¹⁰³ | 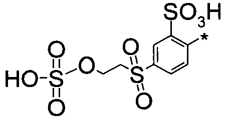 | 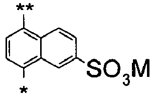 | 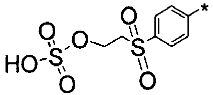 | - |
| I¹⁰⁴ | 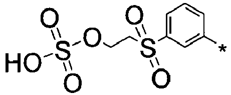 | 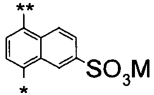 | 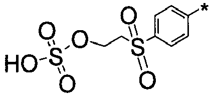 | - |
| I¹⁰⁵ | 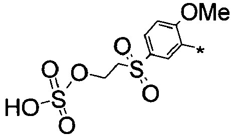 | 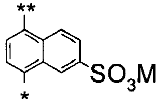 | 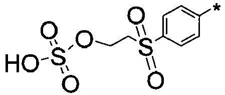 | - |
| I¹⁰⁶ | 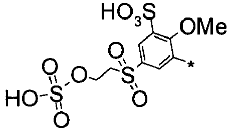 | 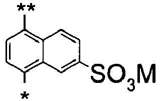 | 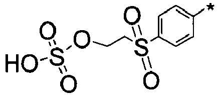 | - |
| I¹⁰⁷ | 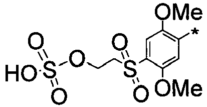 | 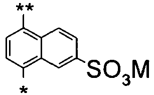 | 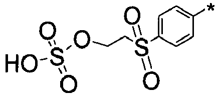 | - |
| I¹⁰⁸ | 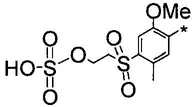 | 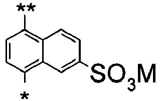 | 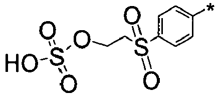 | - |
| I¹⁰⁹ | 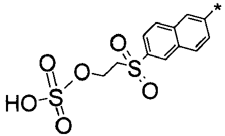 | 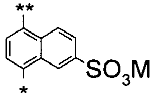 | 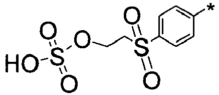 | - |
| I¹¹⁰ | 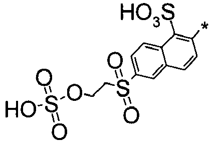 | 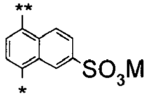 | 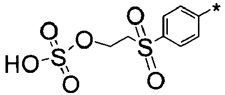 | - |
| I¹¹¹ | 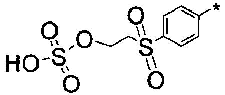 | 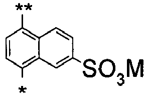 | 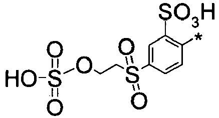 | - |
| I¹¹² | 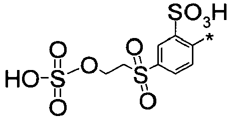 | 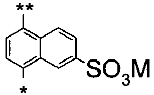 | 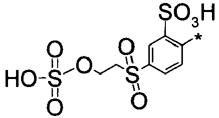 | - |
| I¹¹³ | 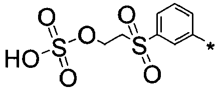 | 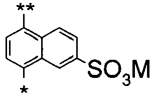 | 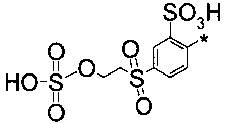 | - |
| I¹¹⁴ | 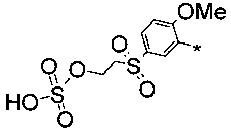 | 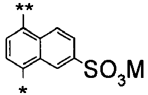 | 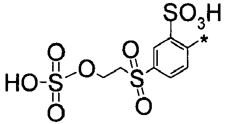 | - |
| I¹¹⁵ | 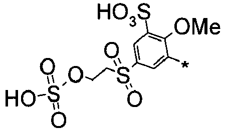 | 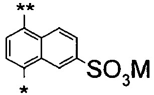 | 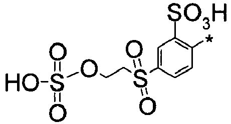 | - |
| I¹¹⁶ | 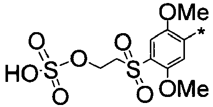 | 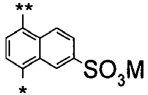 | 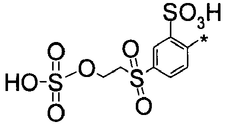 | - |
| I¹¹⁷ | 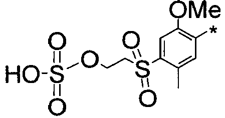 | 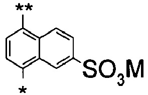 | 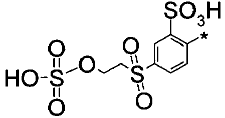 | - |
| I¹¹⁸ | 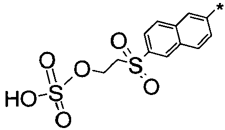 | 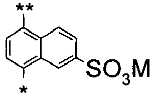 | 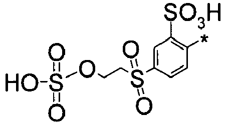 | - |
| I¹¹⁹ | 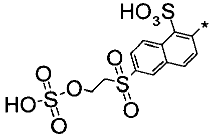 | 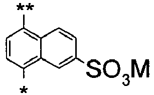 | 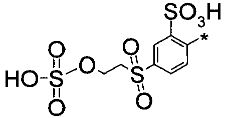 | - |
| I¹²⁰ | 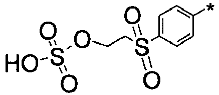 | 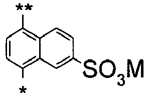 | 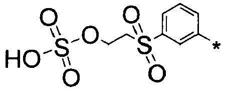 | - |
| I¹²¹ | 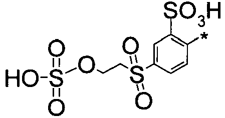 | 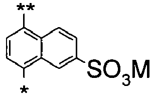 | 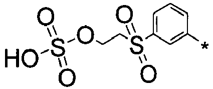 | - |
| I¹²² | 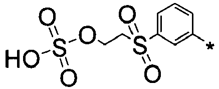 | 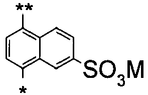 | 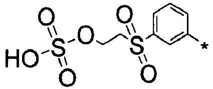 | - |
| I¹²³ | 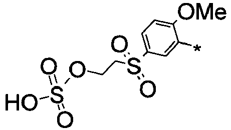 | 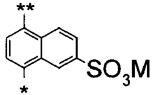 | 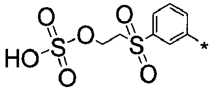 | - |
| I¹²⁴ | 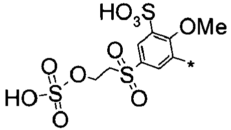 | 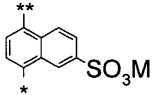 | 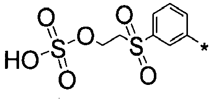 | - |
| I¹²⁵ | 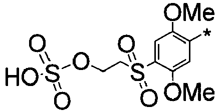 | 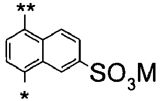 | 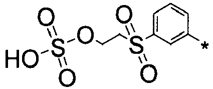 | - |
| I¹²⁶ | 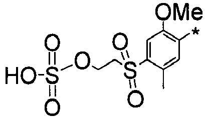 | 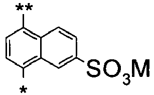 | 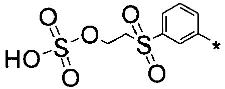 | - |
| I¹²⁷ | 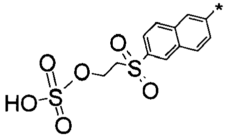 | 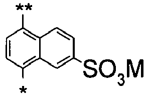 | 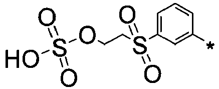 | - |
| I¹²⁸ | 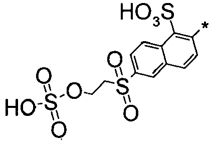 | 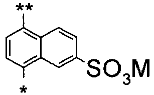 | 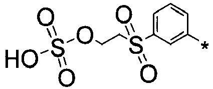 | - |
| I¹²⁹ | 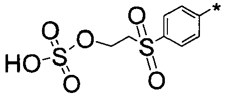 | 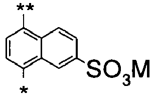 | 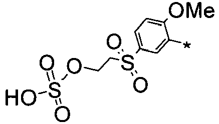 | - |
| I¹³⁰ | 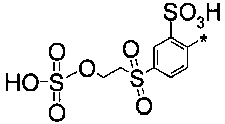 | 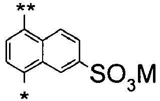 | 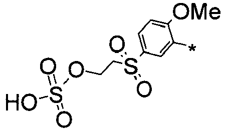 | - |
| I¹³¹ | 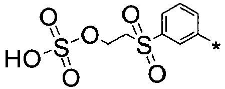 | 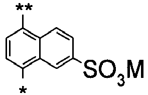 | 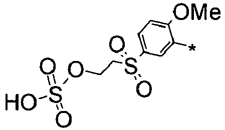 | - |
| I¹³² | 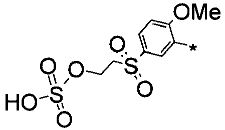 | 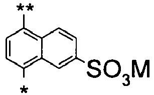 | 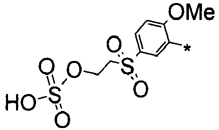 | - |
| I¹³³ | 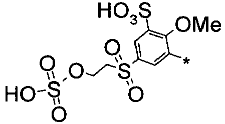 | 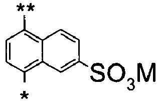 | 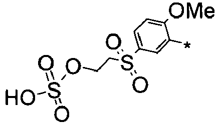 | - |
| I¹³⁴ | 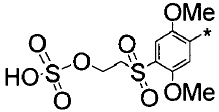 | 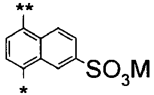 | 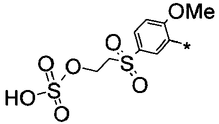 | - |
| I¹³⁵ | 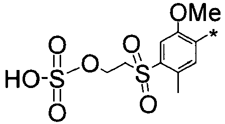 | 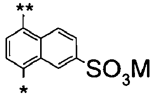 | 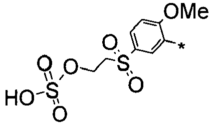 | - |
| I¹³⁶ | 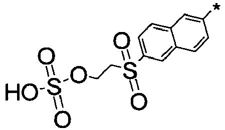 | 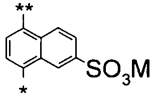 | 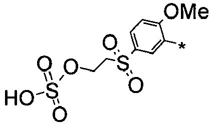 | - |
| I¹³⁷ | 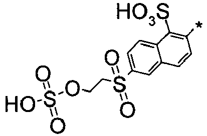 | 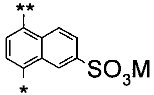 | 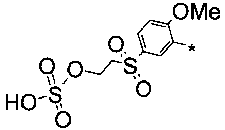 | - |
| I¹³⁸ | 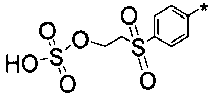 | 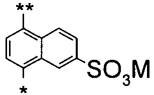 | 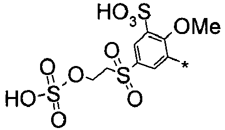 | - |
| I¹³⁹ | 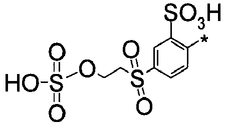 | 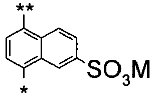 | 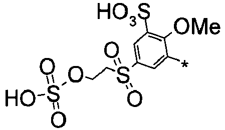 | - |
| I¹⁴⁰ | 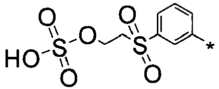 | 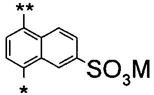 | 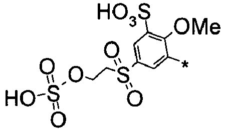 | - |
| I¹⁴¹ | 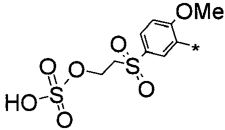 | 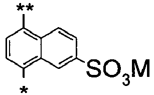 | 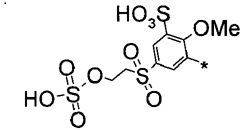 | - |
| I¹⁴² | 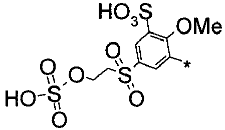 | 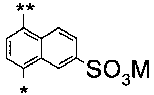 | 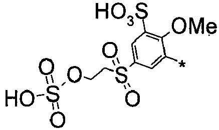 | - |
| I¹⁴³ | 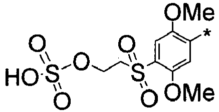 | 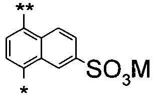 | 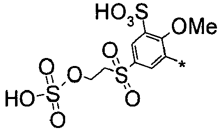 | - |
| I¹⁴⁴ | 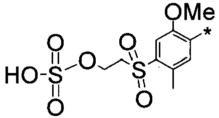 | 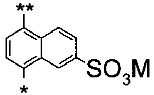 | 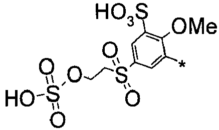 | - |
| I¹⁴⁵ | 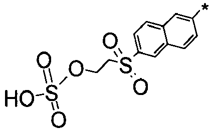 | 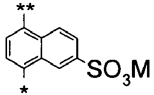 | 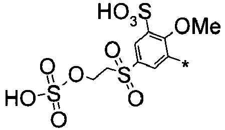 | - |
| I¹⁴⁶ | 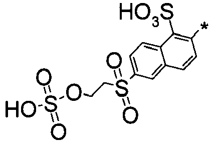 | 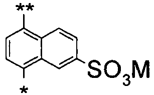 | 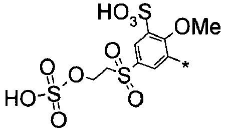 | - |
| I¹⁴⁷ | 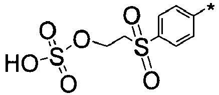 | 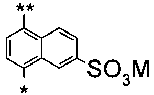 | 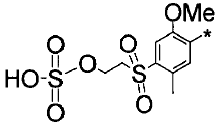 | - |
| I¹⁴⁸ | 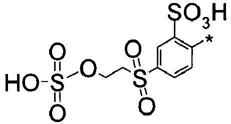 | 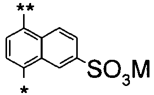 | 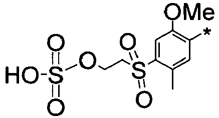 | - |
| I¹⁴⁹ | 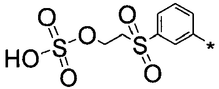 | 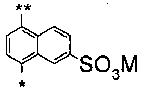 | 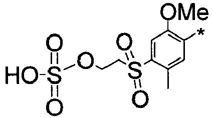 | - |
| I¹⁵⁰ | 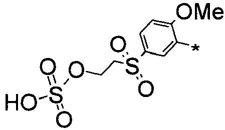 | 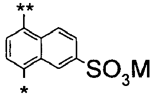 | 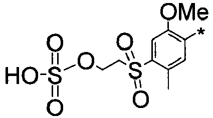 | - |
| I¹⁵¹ | 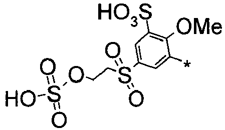 | 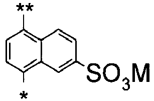 | 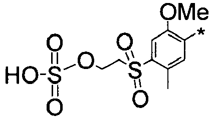 | - |
| I¹⁵² | 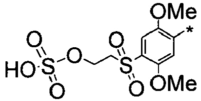 | 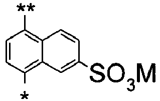 | 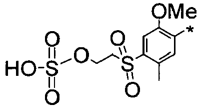 | - |
| I¹⁵³ | 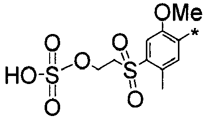 | 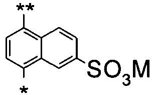 | 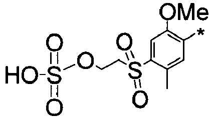 | - |
| I¹⁵⁴ | 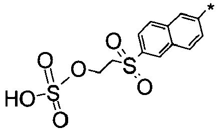 | 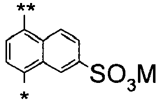 | 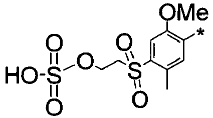 | - |
| I¹⁵⁵ | 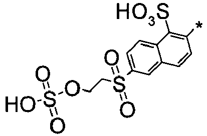 | 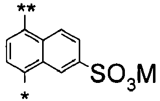 | 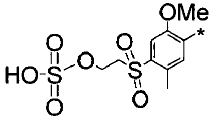 | - |
| I¹⁵⁶ | 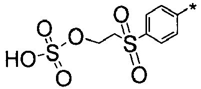 | 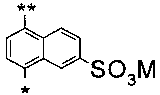 | 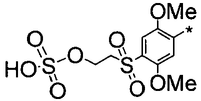 | - |
| I¹⁵⁷ | 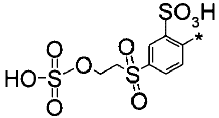 | 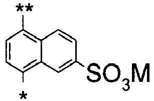 | 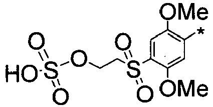 | - |
| I¹⁵⁸ | 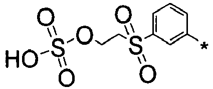 | 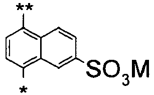 | 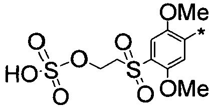 | - |
| I¹⁵⁹ | 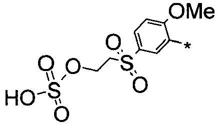 | 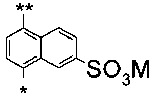 | 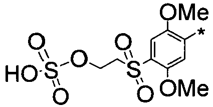 | - |
| I¹⁶⁰ | 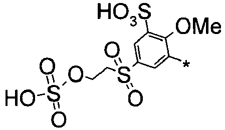 | 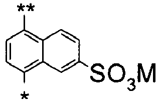 | 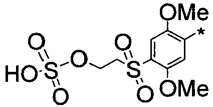 | - |
| I¹⁶¹ | 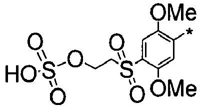 | 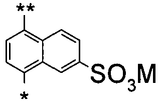 | 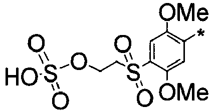 | - |
| I¹⁶² | 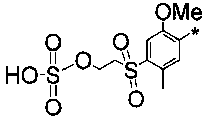 | 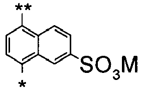 | 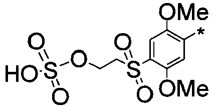 | - |
| I¹⁶³ | 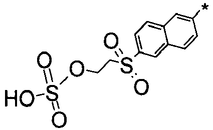 | 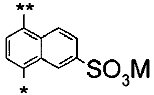 | 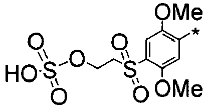 | - |
| I¹⁶⁴ | 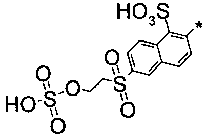 | 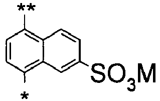 | 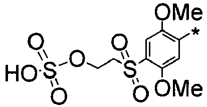 | - |
| I¹⁶⁵ | 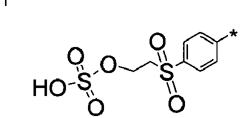 | 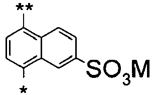 | 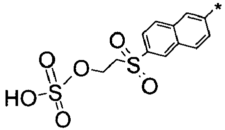 | - |
| I¹⁶⁶ | 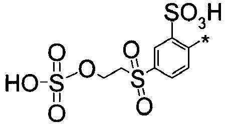 | 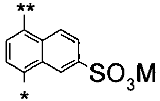 | 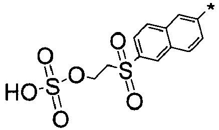 | - |
| I¹⁶⁷ | 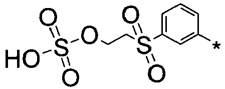 | 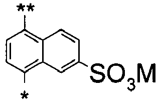 | 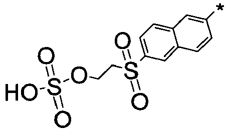 | - |
| I¹⁶⁸ | 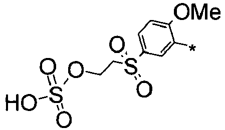 | 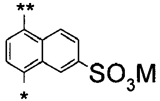 | 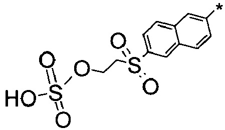 | - |
| I¹⁶⁹ | 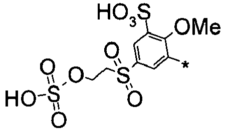 | 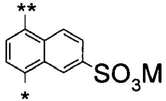 | 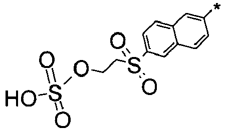 | - |
| I¹⁷⁰ | 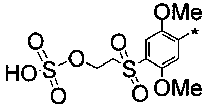 | 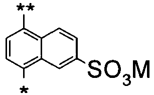 | 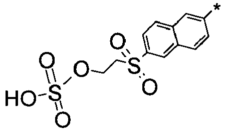 | - |
| I¹⁷¹ | 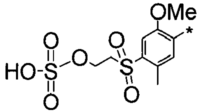 | 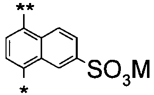 | 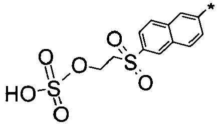 | - |
| I¹⁷² | 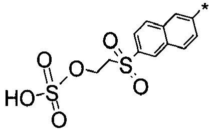 | 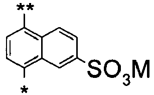 | 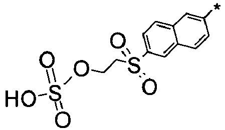 | - |
| I¹⁷³ | 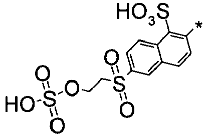 | 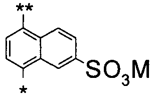 | 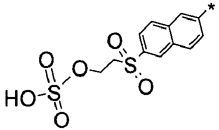 | - |
| I¹⁷⁴ | 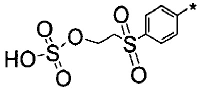 | 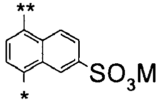 | 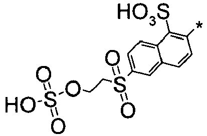 | - |
| I¹⁷⁵ | 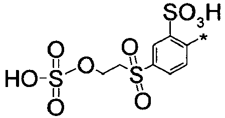 | 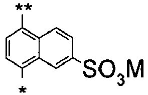 | 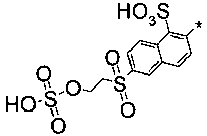 | - |
| I¹⁷⁶ | 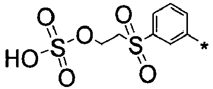 | 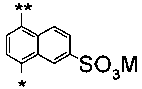 | 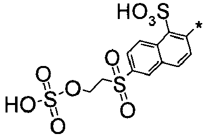 | - |
| I¹⁷⁷ | 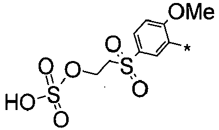 | 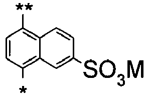 | 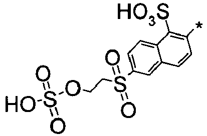 | - |
| I¹⁷⁸ | 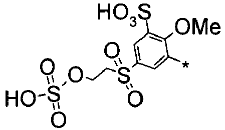 | 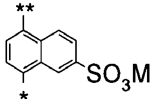 | 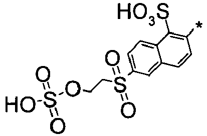 | - |
| I¹⁷⁹ | 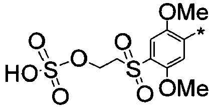 | 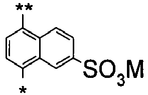 | 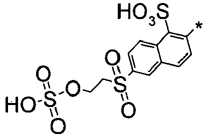 | - |
| I¹⁸⁰ | 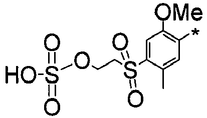 | 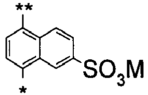 | 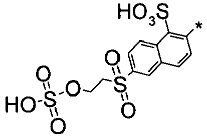 | - |
| I¹⁸¹ | 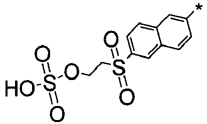 | 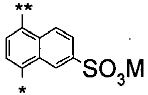 | 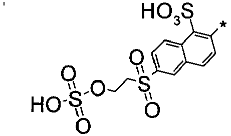 | - |
| I¹⁸² | 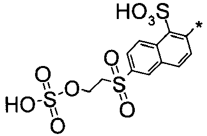 | 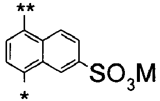 | 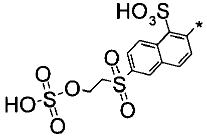 | - |
| I¹⁸³ | 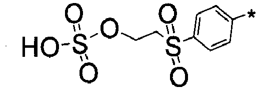 | 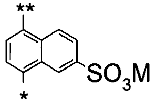 | 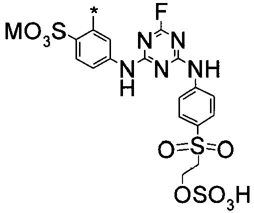 | - |
| **I¹⁸⁴** | 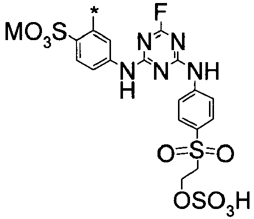 | 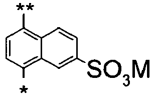 | 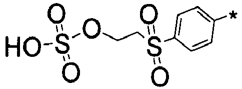 | - |
| **1¹⁸⁵** | 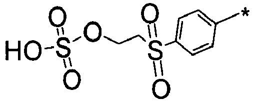 | 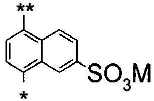 | 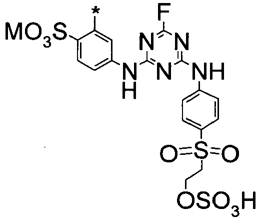 | - |
| I¹⁸⁶ | 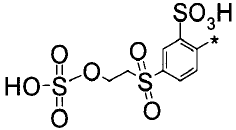 | 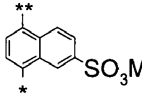 | 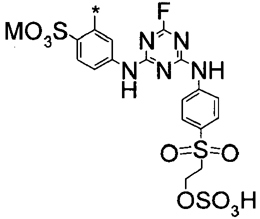 | - |
| I¹⁸⁷ | 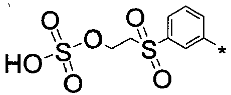 | 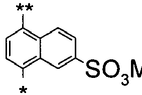 1 | 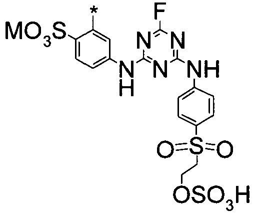 | - |
| I¹⁸⁸ | 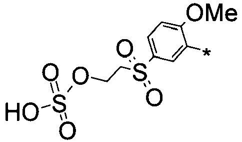 | 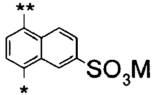 | 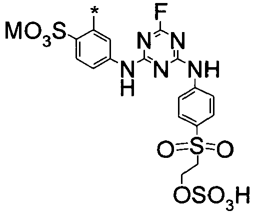 | - |
| I¹⁸⁹ | 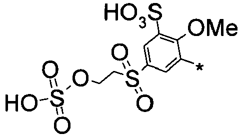 | 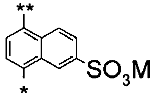 | 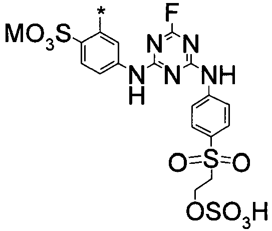 | - |
| I¹⁹⁰ | 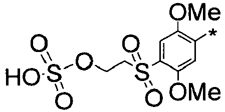 | 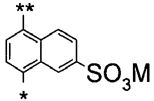 | 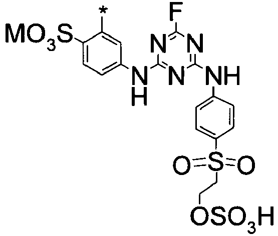 | - |
| I¹⁹¹ | 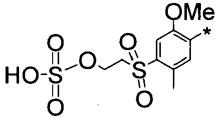 | 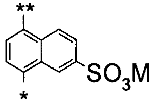 | 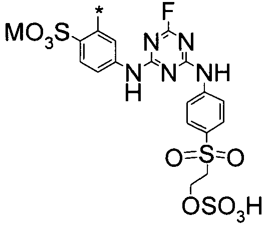 | - |
| I¹⁹² | 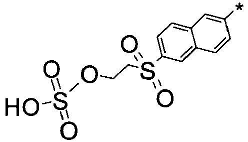 | 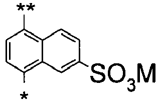 | 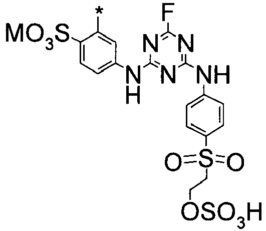 | - |
| I¹⁹³ | 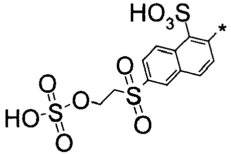 | 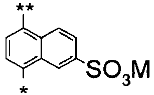 | 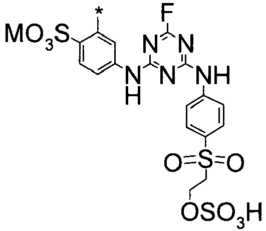 | - |
| I¹⁹⁴ | 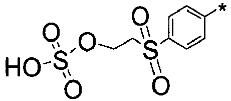 | 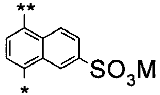 | 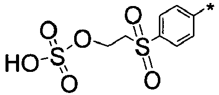 | 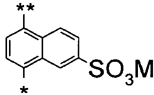 |
| I¹⁹⁵ | 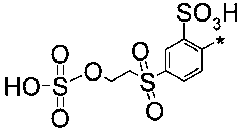 | 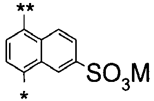 | 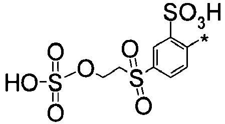 | 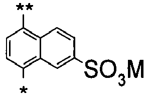 |
| I¹⁹⁶ | 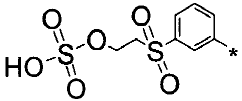 | 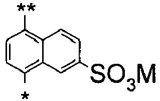 | 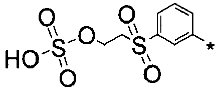 | 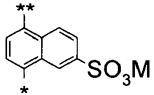 |
| I¹⁹⁷ | 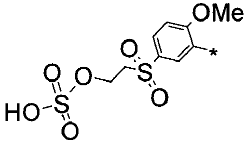 | 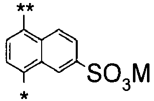 | 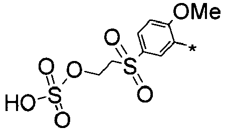 | 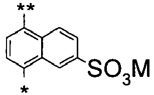 |
| I¹⁹⁸ | 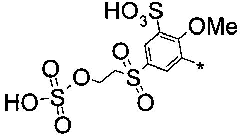 | 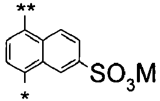 | 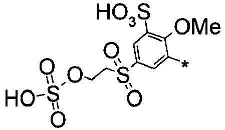 | 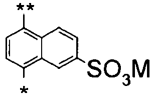 |
| I¹⁹⁹ | 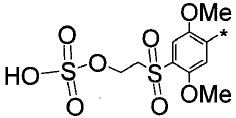 | 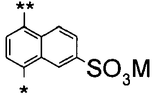 | 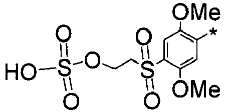 | 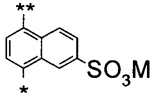 |
| I²⁰⁰ | 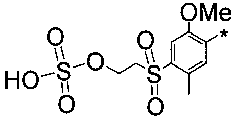 | 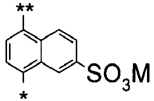 | 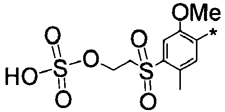 | 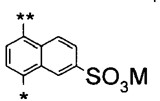 |
| I²⁰¹ | 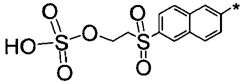 | 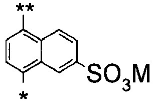 | 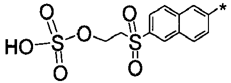 | 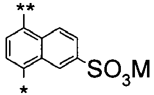 |
| I²⁰² | 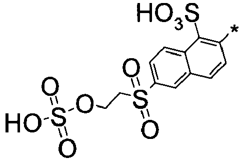 | 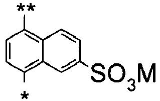 | 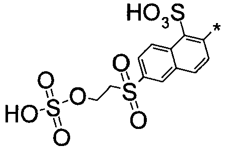 | 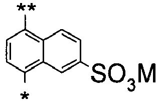 |
| I²⁰³ | 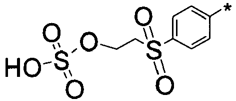 | 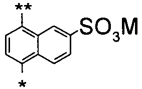 | 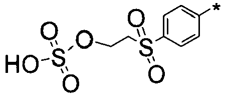 | - |
| I²⁰⁴ | 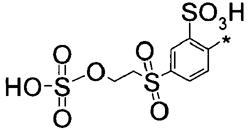 | 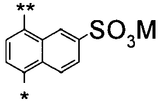 | 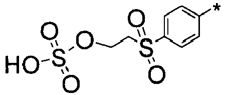 | - |
| I²⁰⁵ | 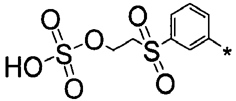 | 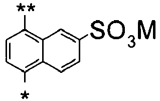 | 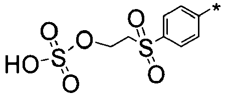 | - |
| I²⁰⁶ | 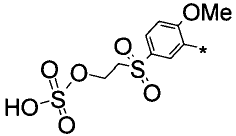 | 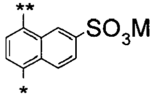 | 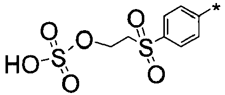 | - |
| I²⁰⁷ | 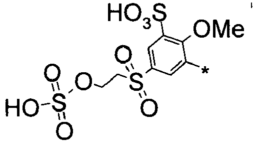 | 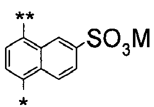 | 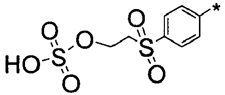 | - |
| I²⁰⁸ | 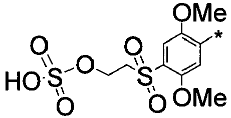 | 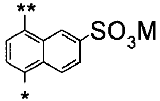 | 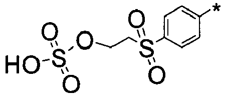 | - |
| I²⁰⁹ | 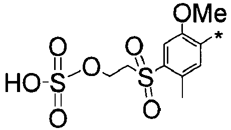 | 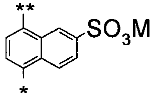 | 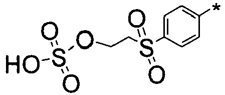 | - |
| I²¹⁰ | 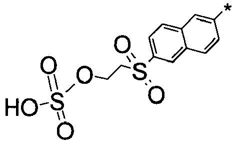 | 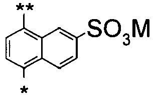 | 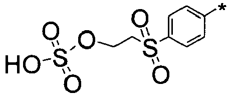 | - |
| I²¹¹ | 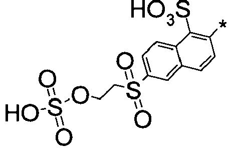 | 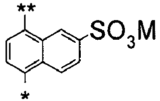 | 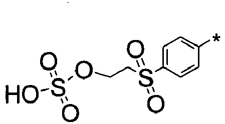 | - |
| I²¹² | 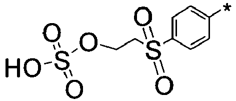 | 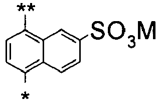 | 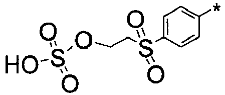 | 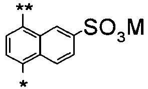 |
| I²¹³ | 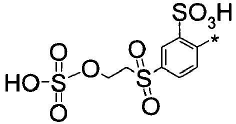 | 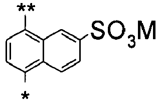 | 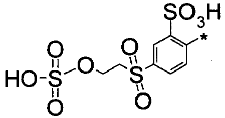 | 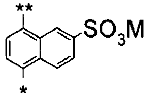 |
| I²¹⁴ | 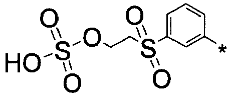 | 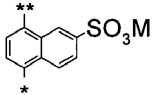 | 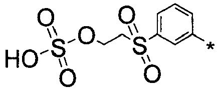 | 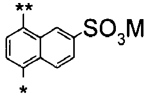 |
| I²¹⁵ | 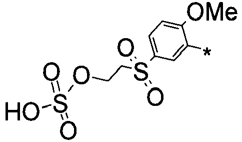 | 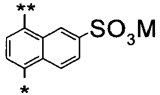 | 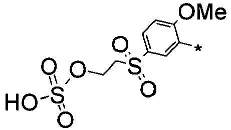 | 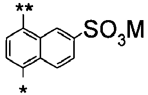 |
| I²¹⁶ | 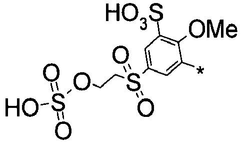 | 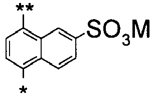 | 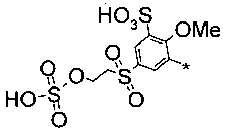 | 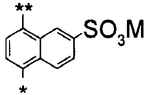 |
| I²¹⁷ | 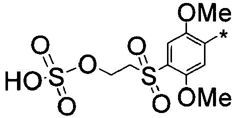 | 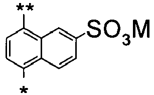 | 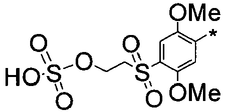 | 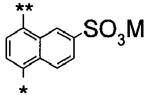 |
| I²¹⁸ | 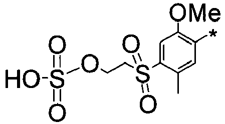 | 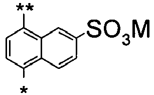 | 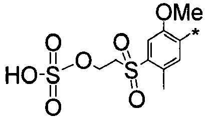 | 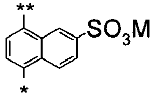 |
| I²¹⁹ | 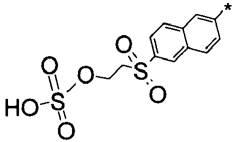 | 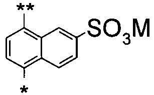 | 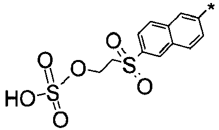 | 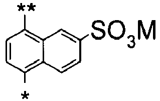 |
| I²²⁰ | 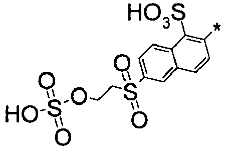 | 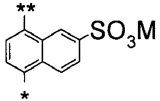 | 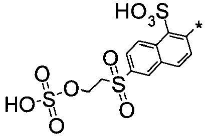 | 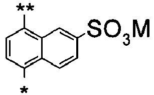 |

| | | | | |
|---|---|---|---|---|
| * refers to the attachment point of A and of C; * refers to the attachment point of B with A and ** refers to the other attachment point of B when a is 1; * refers to the attachment point of D with C and ** refers to the other attachment point of D when b is 1. | | | | |

The present invention also provides a process for the preparation of the dyes of the formula (I). This process comprises diazotizing a compound of the formula A-NH₂ where A is the same as defined above, and coupling the diazotization product with a compound of the formula (II) when a is 0, 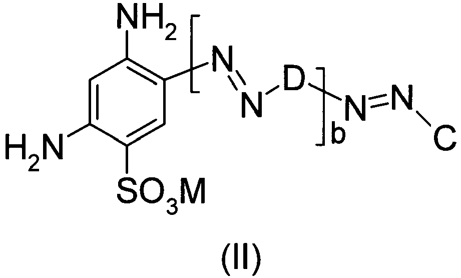 or with a coupling component B-NH₂ when a is 1, whereby the coupling product is further diazotized and coupled to a compound of the formula (II).

The preparation of a compound of the formula (II) comprises diazotizing a compound of the formula C-NH₂ where C is the same as defined above, and coupling the diazotization product with 2,4-diamino-benzene sulfonic acid when b is 0, or with a coupling component D-NH₂ when a is 1, whereby the coupling product is further diazotized and coupled to 2,4-diamino-benzene sulfonic acid.

The diazotization reactions, in general, can be performed by means of diazotization methods that are known to a person skilled in the art, preferably by using sodium nitrite or nitrosylsulfuric acid in acidic medium using inorganic acids such as hydrochloric acid, sulfuric acid or phosphoric acid or mixtures thereof or organic acids such as acetic acid or propionic acid or mixtures thereof. Also mixtures of inorganic acid with organic acids can be advantageously used. As such, the resulting diazonium salts contain as counter-anion the respective conjugated base of the acid used for the diazotization reaction, or mixtures thereof when a mixture of two or more acids were used.

The coupling reactions in general can be performed by known methods.

The compounds of the formula A-NH₂, B-NH₂, C-NH₂ and D-NH₂ are known and commercially available or can be synthesised by means of common chemical reactions known to a person skilled in the art.

The end product can optionally also be subjected to a vinylization reaction. For example, a vinylizable reaction group such as the β-sulfatoethylsulfonyl is converted into its vinyl form. Such reactions are known to a person skilled in the art. They are generally performed in a neutral to alkaline medium at a temperature, for example, from 20 to 80°C, at a pH of, for example, from 7 to 14.

The dyes of formula (I) are fiber-reactive containing fiber-reactive functional rests. Fiber-reactive functional rests refer to rests capable of reacting with the hydroxyl groups of cellulosic materials, the amino, carboxyl, hydroxyl and thiol groups in the case of wool and silk, or with the amino and possibly carboxyl groups of synthetic polyamides to form covalent chemical bonds.

The dyes of the present invention are suitable for dyeing and printing of natural, manufactured, regenerated, mechanically or chemically modified, recycled or synthetic hydroxyl-, amino-, and/or carboxamido-containing fiber materials and their blends by the application methods numerously described in the art for reactive dyes. Therefore, the present invention also provides for a process for dyeing and printing of the above-mentioned fiber materials and their blends in which a dye or a dye mixture according to the present invention is used.

Examples of natural fibre materials as described above are vegetable fibres such as seed fibres i.e. cotton, organic cotton, kapok, coir from coconut husk; bast fibers i.e. flax, hemp, jute, kenaf, ramie, rattan; leaf fibres i.e. sisal, henequen, banana; stalk fibres i.e. bamboo; and fibres from animals such as wool, organic wool, silk, cashmere wool, alpaca fiber, mohair, Angora fibre as well as fur and leather materials.

Examples of manufactured and regenerated fibres are cellulosic fibres such as paper and cellulosic regenerated fibres such as viscose rayon fibres, acetate and triacetate fibers and Lyocell fibers.

Examples of synthetic fiber materials as described above are nylon materials, like nylon-6, nylon-6.6 and aramid fibres.

The above-mentioned substrates to be dyed can be present in various forms such as but not limited to yarn, woven fabric, loop-formingly knitted fabric or carpet.

The dyes of the present invention and their salts or mixtures can be used as a single dyeing product in dyeing or printing processes or it can be part of a di/tri or multicomponent combination product in dyeing or in printing compositions.

Dyes of this invention and their salts or mixtures are highly compatible with other known and/or commercially available dyes and they can be used together with such dyes to obtain specific hues of similarly good technical performance. Technical performance includes build-up, fastness properties and levelness.

Since the water solubility of the dyes according to the invention is very good, they can also be used with advantage in customary continuous dyeing processes.

The dyes of the present invention can also be used in digital printing processes, in particular in digital textile printing. Aqueous inks for digital printing which comprise a dye of the present invention likewise form part of the subject matter of the present invention.

The inks of the present invention comprise the dye of the present invention in amounts which preferably range from 0.1% by weight to 50% by weight, more preferably from 1% by weight to 30% by weight and most preferably from 1% by weight to 15% by weight, based on the total weight of the ink.

The inks, as well as the dyes of the present invention may, if desired, contain further dyes used in digital printing.

For the inks of the present invention to be used in the continuous flow process, a conductivity of 0.5 to 25 mS/m can be set by adding an electrolyte. Useful electrolytes include for example lithium nitrate and potassium nitrate. The inks of the present invention may include organic solvents at a total level of 1-50% and preferably 5-30% by weight. Suitable organic solvents are for example alcohols, for example methanol, ethanol, 1-propanol, isopropanol, 1-butanol, tert-butanol, pentyl alcohol, polyhydric alcohols for example: 1,2-ethanediol, 1,2,3-propanetriol, butanediol, 1,3-butanediol, 1,4-butanediol, 1,2-propanediol, 2,3-propanediol, pentanediol, 1,4-pentanediol, 1,5-pentanediol, hexanediol, D,L-1,2-hexanediol, 1,6-hexanediol, 1,2,6-hexanetriol, 1,2-octanediol, polyalkylene glycols, for example: polyethylene glycol, polypropylene glycol, alkylene glycols having 1 to 8 alkylene groups, for example: monoethylene glycol, diethylene glycol, triethylene glycol, tetraethylene glycol, thioglycol, thiodiglycol, butyltriglycol, hexylene glycol, propylene glycol, dipropylene glycol, tripropylene glycol, low alkyl ethers of polyhydric alcohols, for example: ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol monohexyl ether, triethylene glycol monomethyl ether, triethylene glycol monobutyl ether, tripropylene glycol monomethyl ether, tetraethylene glycol monomethyl ether, tetraethylene glycol monobutyl ether, tetraethylene glycol dimethyl ether, propylene glycol monomethyl ether, propylene glycol monoethyl ether, propylene glycol monobutyl ether, tripropylene glycol isopropyl ether, polyalkylene glycol ethers, such as for example: polyethylene glycol monomethyl ether, polypropylene glycol glycerol ether, polyethylene glycol tridecyl ether, polyethylene glycol nonylphenyl ether, amines, such as for example: methylamine, ethylamine, triethylamine, diethylamine, dimethylamine, trimethylamine, dibutylamine, diethanolamine, triethanolamine, N-acetylethanolamine, N-formylethanolamine, ethylenediamine, urea derivatives, such as for example: urea, thiourea, N-methylurea, N,N'-epsilon dimethylurea, ethyleneurea, 1,1,3,3-tetramethylurea, amides, such as for example: dimethylformamide, dimethylacetamide, acetamide, ketones or keto alcohols, such as for example: acetone, diacetone alcohol, cyclic ethers, such as for example: tetrahydrofuran, trimethylolethane, trimethylolpropane, 2-butoxyethanol, benzyl alcohol, 2-butoxyethanol, gamma butyrolactone, epsilon-caprolactam, further sulfolane, dimethylsulfolane, methylsulfolane, 2,4-dimethylsulfolane, dimethyl sulfone, butadiene sulfone, dimethyl sulfoxide, dibutyl sulfoxide, N-cyclohexylpyrrolidone, N-methyl-2-pyrrolidone, N-ethylpyrrolidone, 2-pyrrolidone, 1-(2-hydroxyethyl)-2-pyrrolidone, 1-(3-hydroxypropyl)-2-pyrrolidone, 1,3-dimethyl-2-imidazolidinone, 1,3-dimethyl-2-imidazolinone, 1,3-bismethoxymethylimidazolidine, 2-(2-methoxyethoxy)ethanol, 2-(2-ethoxyethoxy)ethanol, 2-(2-butoxyethoxy)ethanol, 2-(2-propoxyethoxy)ethanol, pyridine, piperidine, butyrolactone, trimethylpropane, 1,2-dimethoxypropane, dioxane ethyl acetate, ethylenediaminetetraacetate ethyl pentyl ether, 1,2-dimethoxypropane and trimethylpropane.

The inks of the invention may further include customary additives, for example viscosity moderators to set viscosities in the range from 1.5 to 40.0 mPas in a temperature range from 20 to 50°C. Preferred inks have a viscosity of 1.5 to 20 mPas and particularly preferred inks have a viscosity of 1.5 to 15 mPas.

Useful viscosity moderators include rheological additives, for example: polyvinylcaprolactam, polyvinylpyrrolidone and their copolymers polyetherpolyol, associative thickeners, polyurea, polyurethane, sodium alginates, modified galactomannans, polyetherurea, polyurethane, nonionic cellulose ethers.

As further additives the inks of the invention may include surface-active substances to set surface tensions of 20 to 65 mN/m, which are adapted if necessary as a function of the process used (thermal or piezo technology). Useful surface-active substances include for example all surfactants, preferably nonionic surfactants, butyldiglycol and 1,2-hexanediol.

The inks of the present invention may further include customary additives, for example substances to inhibit fungal and bacterial growth in amounts from 0.01 to 1% by weight based on the total weight of the ink.

The inks may be prepared in a conventional manner by mixing the components in water.

The inks of the present invention are particularly useful in inkjet printing processes for printing a wide variety of materials, in particular of wool and polyamide fibers.

The examples below serve to illustrate the invention. Parts and percentages are by weigh unless noted otherwise. The relationship between parts by weight and parts by volume is that of the kilogram to the liter.

### Example 1:

i) 7.6 parts of 2-[(3-sulfo-4-aminobenzene)sulfonyl]ethoxy}sulfonic acid was suspended in 70 parts of water. The reaction vessel was cooled to 0~5°C using ice. 5.2 parts of 37% hydrochloric acid was added into the reaction mixture. After stirring for 30 min, 4.3 milliliters of of 5M sodium nitrite was added. The reaction was stirred at 0~5°C for 1 hour and then 0.2 parts of sulfamic acid was added.
   4.5 parts of 5-Amino-2-naphthalenesulfonic acid was added into the diazonium salt. The pH was adjust to 1~1.5 using 15% soda solution. The reaction was stirred for 1 hour to yield the intermediate (b) without isolation. 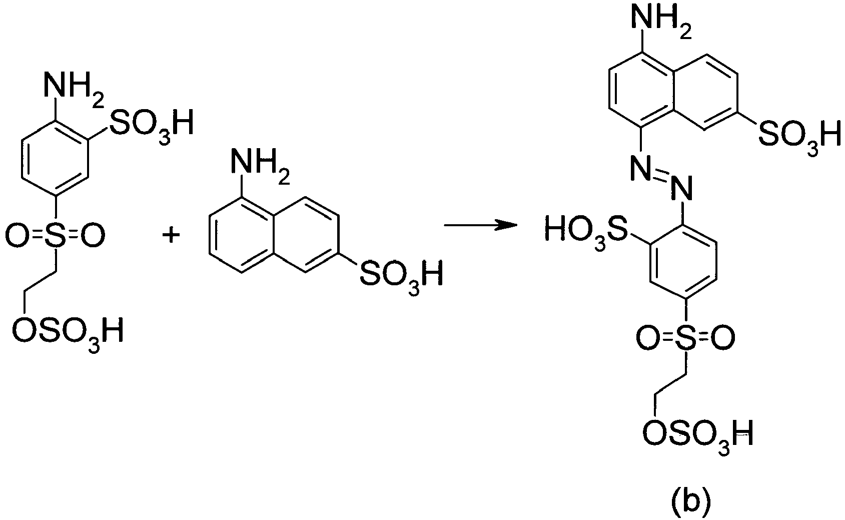
ii) The pH of the solution of (b) synthesized above was adjusted to 5-6 using 15% soda solution and cooled to 0~5°C using ice. 4.8 milliliters of 5M sodium nitrile was added. This reaction mixture was then added to a mixture of 19.7 parts of 37% hydrochloric acid and 30 parts of ice. The reaction was stirred at 0~5°C until completion and then 0.2 parts of sulfamic acid was added.
   3.6 parts of 2,4-diamino-benzene sulfonic acid was dissolved in 40 parts of water and the pH was adjusted to 6∼6.5 using 15% soda solution. This solution was cooled to 10~15 °C using ice. To this solution was added the diazonium salt dropwise. The pH dropped to 2.5∼3 and afterwards was maintained at such values using 15% soda solution. The reaction was stirred until completion to yield the intermediate (c) without isolation. 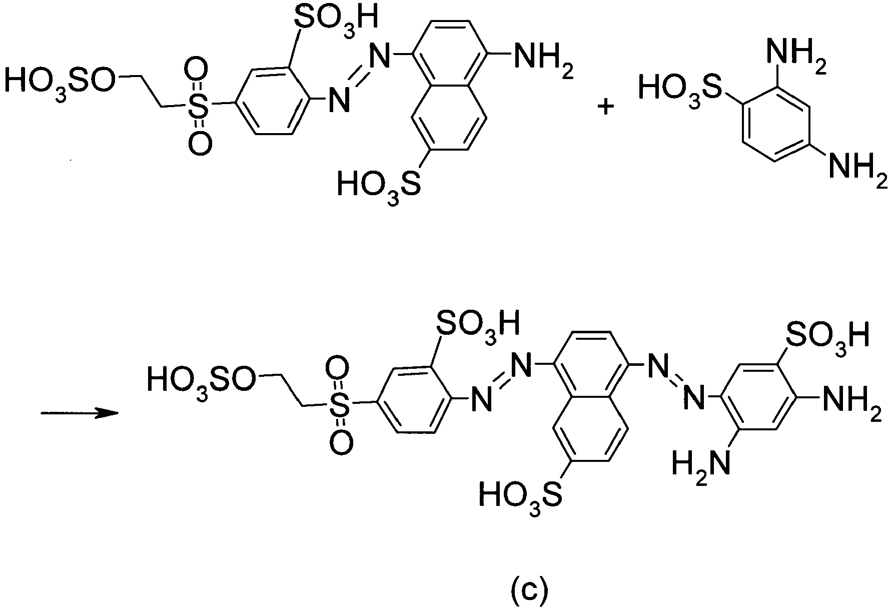
iii) 5.6 parts of 2-(p-aminophenylsulfonyl)ethyl hydrogen sulfate was suspended in 70 parts of water. The reaction vessel was cooled to 0~5°C using ice. 5.9 parts of 37% hydrochloric acid was added into the reaction mixture. After stirring for 10 min, 4.3 milliliters of of 5M sodium nitrite was added. The reaction was stirred at 0~5°C for 1 hour and then 0.2 parts of sulfamic acid was added.

The diazonium salt was added slowly into the solution of (c) synthesized above while maintaining the pH to 5~5.5. The reaction was stirred until completion. The product was precipitated out, collected by filtration and dried to give 16.5 parts of dye I² as brown solid.

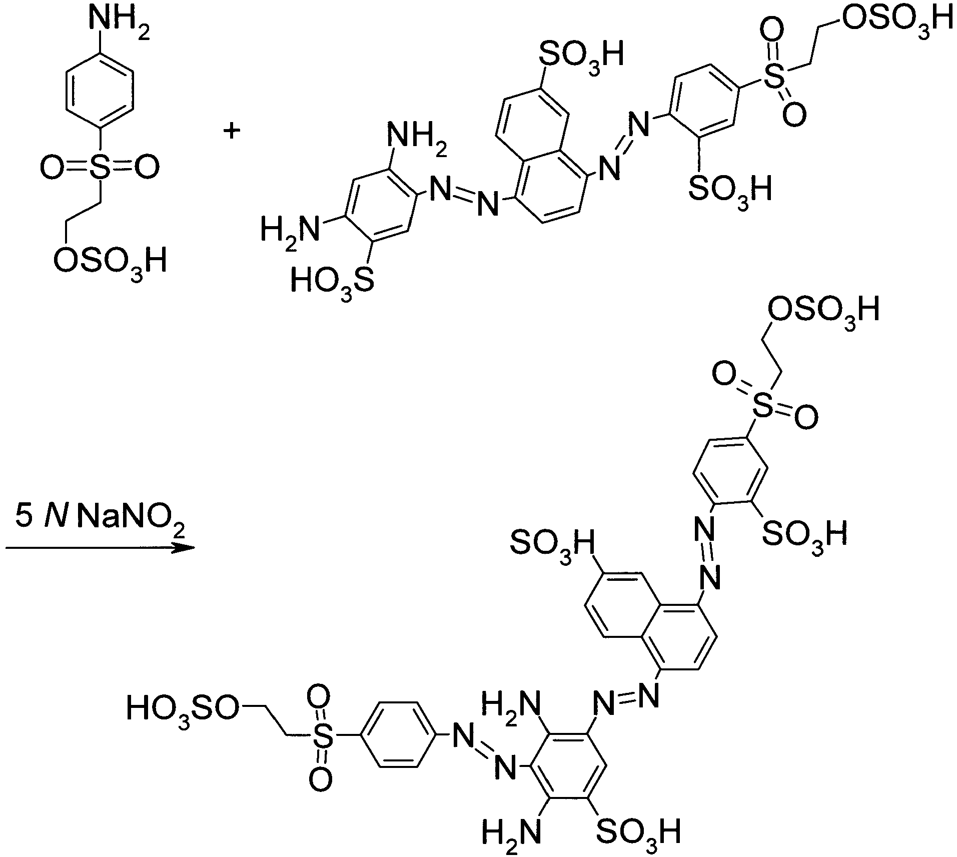

Through analogy, all the dyes of formulae (I¹-I²²⁰) can be synthesized according to the method described above in the example 1.

### Dyeing example 1

3 parts of the dye I⁶ of this invention is dissolved in 2000 parts of water and 1 part of levelling assistant (based on condensation product of a higher aliphatic amine and ethylene oxide) is added. The pH is then adjusted to 3.8-4.2 using acetic acid (60%). The dyebath is entered with 100 parts of a woven wool fabric. The temperature is raised to 40°C over the course of 30 minutes, maintained at this temperature for 15 minutes and then increased to 98°C over the course of 58 minutes and dyeing is carried out at this temperature for 90 minutes. This is followed by cooling to 90°C and removal of the dyed material. The wool fabric is washed with hot and cold water, alkaline-treated and then spun and dried. The dark black dyeings obtained show good levelness in the fibre, as well asexcellent light fastness in Xenon LF ISO 195 B02 test surpassing the light fastness of commercial products based on Reactive Black 5 even at lower dye concentration on weight fabric. Furthermore, the dyeings show very good wet fastness properties in the wash fastness 60°C ISO 105 C03 test, as well as in the alkaline perspiration ISO 105 E04 test at twice the colour depth of commercial products based on Reactive Black 5.

### Dyeing example 2

2 parts of the dye I⁶ of this invention and 60 parts of sodium chloride are dissolved in 1000 parts of water, and 12 parts of sodium carbonate and 0.5 part of a wetting agent are added. This dyebath is entered with 100 parts of bleached cotton knitted fabric. The temperature of the dye bath is raised to 30°C at a gradient of 0.5°C/minute and held at this temperature for 30 minutes, and then increased to 60°C over 30 minutes, this temperature being maintained for a further 60 minutes. Thereafter the dyed goods are initially rinsed with tapwater for 5 minutes. The dyed goods are neutralized at 50°C using 60% strength acetic acid for 30-40 minutes. The goods are rinsed with tapwater at boil for 30-40 minutes followed by a final rinse at 40~50°C for 20 minutes and dried. The strong dark brown dyeing obtained has good overall fastness properties.

### Dyeing example 3

1 part of the dye I⁶ of this invention is dissolved in 2000 parts of water and 1 part of levelling assistant (based on condensation product of a higher aliphatic amine and ethylene oxide) and 6 parts of sodium acetate are added. The pH is then adjusted to 4.5 using acetic acid (80%). The dyebath is heated to 50°C for 10 minutes and then entered with 100 parts of a woven polyamide fabric. The temperature is raised to 110°C over the course of 50 minutes and then dyeing is carried out at this temperature for 60 minutes. This is followed by cooling to 60°C and removal of the dyed material. The polyamide fabric is washed with hot and cold water, soaped and then spun and dried. The dyeings obtained have good overall fastness properties and good levelness in the fibre.

### Dyeing example 4

A textile fabric consisting of mercerized cotton is padded with liquor containing 35 g/l of calcium sodium carbonate, 100 g/l of urea and 150 g/l of a low-viscosity sodium alginate solution (6%), and then dried. The liquor pickup is 70%. The textile thus pretreated is printed with an aqueous ink containing 2% of the dye I⁶ of this invention, 20% of sulfolane, 0.01% of Mergal K9N and 77.99% of water using a drop-on-demand (bubblejet) ink-jet printing head. The print is fully dried. It is fixed by means of saturated steam at 102°C for 8 minutes. The print is then rinsed warm, subject to a fastness wash with hot water at 95°C, rinsed warm and then dried. The obtained print has good overall fastness properties.

## Claims

1. Chemical compound according to formula (I) 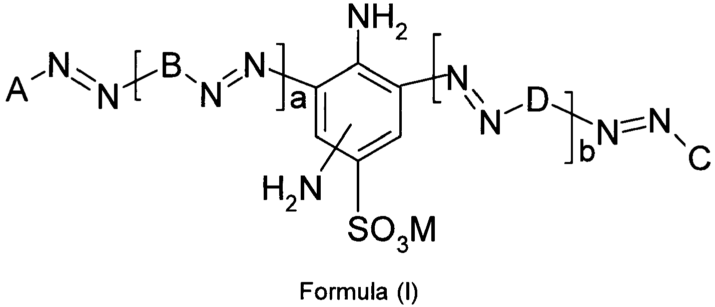 wherein,
each of A and C, independent of each other is a radical of general formula (1a) 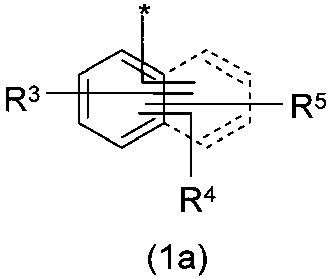
wherein,
each of R³ to R⁵, independent of each other is hydrogen, halogen, straight-chain or branched alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, unsubstituted or substituted aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a), (2b) or (2c) 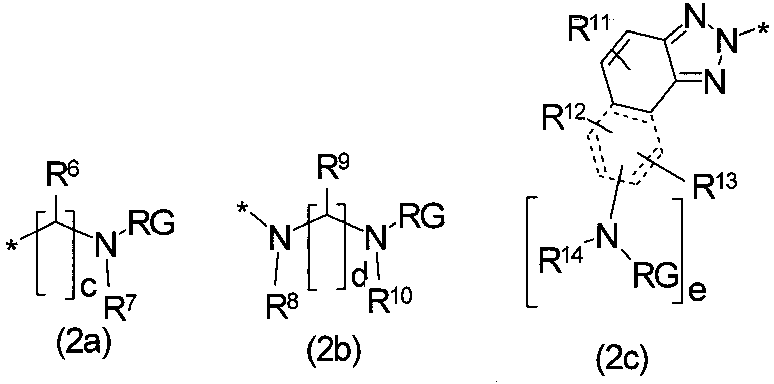
wherein,
each of R⁶ and R⁹, independent of each other is hydrogen, halogen, straight-chain or branched alkyl, N-acylamino, alkoxy, thioalkoxy, hydroxy, cyano, alkoxycarbonyl, alkoxythiocarbonyl, acyl, thioacyl, aryloyl, trifluoromethyl, acyloxy, aryloyloxy, cycloalkyl, unsubstituted or substituted aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
each of R⁷, R⁸, R¹⁰ and R¹⁴, independent of each other is hydrogen, straight-chain or branched alkyl, cycloalkyl or unsubstituted or substituted aryl; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
each of R¹¹ to R¹³, independent of each other is hydrogen, halogen, straight-chain or branched alkyl, alkoxy or SOsM; and
c is an integer of 0 to 6; and
d is an integer of 1 to 6; and
when each of c and d, independent of each other is ≥ 2, R⁶ and R⁹ can have different meanings within the same rest as per meaning above defined; and
e is 0 or 1; and
RG is a reactive anchor of general formula (3a), (3b) or (3c); 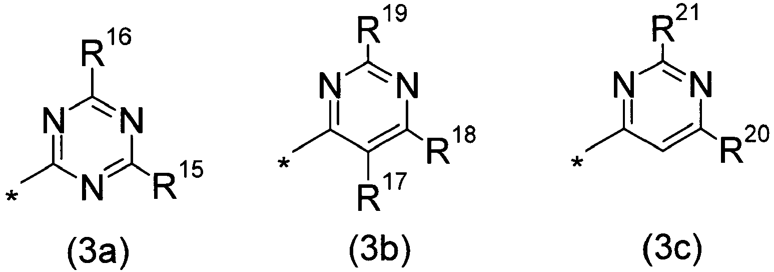
wherein,
each of R¹⁶ to R²¹, independent of each other is halogen; and
R¹⁶ can additionally be a rest of formula (4a) 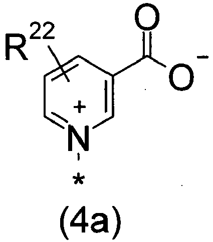
wherein,
R²² is hydrogen, halogen, straight-chain or branched alkyl, alkoxy, thioalkoxy, hydroxy, cycloalkyl, unsubstituted or substituted aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
R¹⁵ is one of the groups selected from general formula (5a) or (5b); 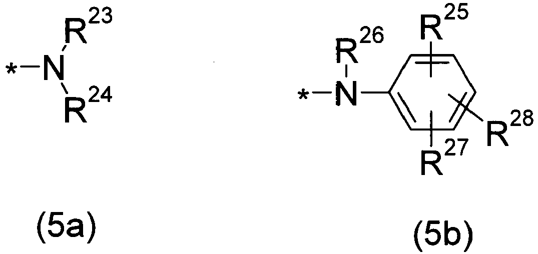
wherein,
each of R²³, R²⁴ and R²⁶, independent of each other is hydrogen, straight-chain or branched alkyl, cycloalkyl or unsubstituted or substituted aryl; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
each of R²⁵, R²⁷ and R²⁸, independent of each other is hydrogen, halogen, straight-chain or branched alkyl, N-acylamino, alkoxy, thioalkoxy, hydroxy, cyano, alkoxycarbonyl, alkoxythiocarbonyl, acyl, thioacyl, aryloyl, sulfamoyl, trifluoromethyl, acyloxy, aryloyloxy, cycloalkyl, unsubstituted or substituted aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
R²⁴ can additionally be -CH₂CH₂-SO₂-X, where X is vinyl or a radical -CH₂CH₂-Y where Y is a group removable under alkaline conditions such as OSO₃M, SSO₃M, OCOCH₃, OPO₃M or halogen; and
R²⁸ can additionally be -SO₂-X where X is the same as defined above;
each of B and D, independent of each other is a radical of general formula (6a) 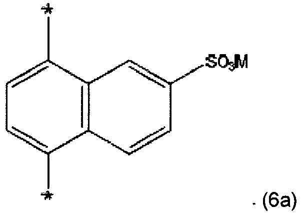
wherein,
each of a and b, independent of each other is an integer of 0 or 1 with the general proviso that a + b is not 0 and dyes of general formula (I) contain at least one reactive anchor and
M is hydrogen, lithium, sodium, potassium, ammonium or mono-, di-, tri- or tetra-(C₁-C₄)-alkylammonium, one equivalent of an alkali earth metal, or a monovalent organic cation.

2. Chemical compound according to claim 1 having formula (Ia): 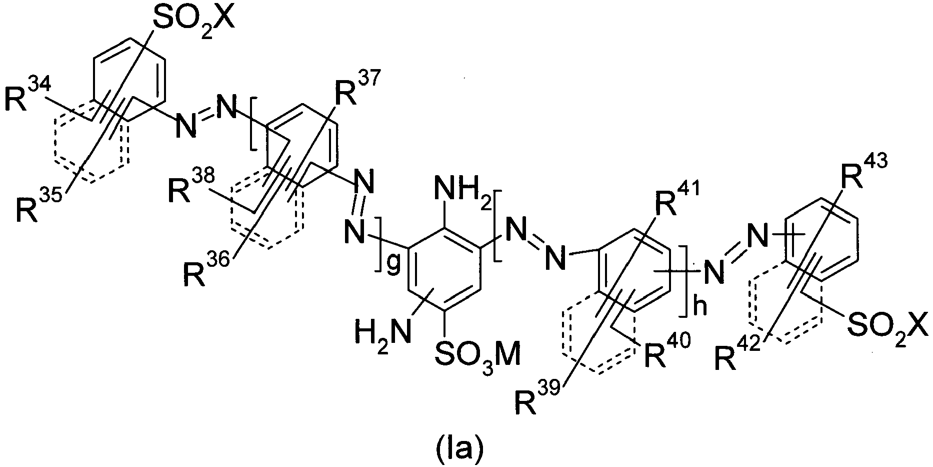 wherein, 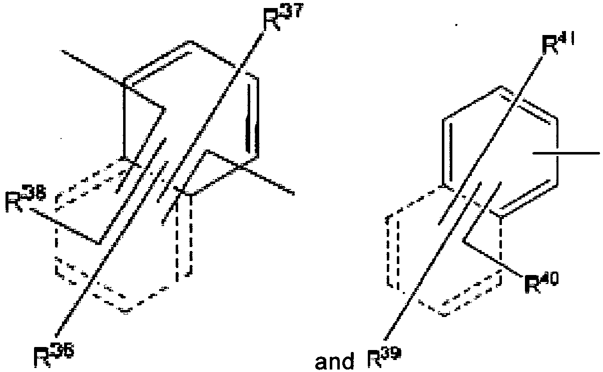 are 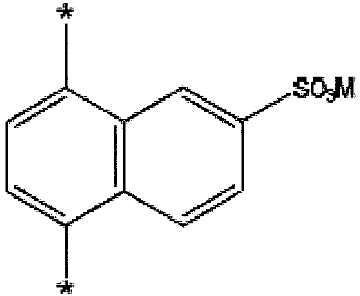
each of R³⁴, R³⁵, R⁴² and R⁴³, independent of each other is hydrogen, halogen, straight-chain or branched alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, unsubstituted or substituted aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy.
X and M are the same as in claim 1 and
each of g and h, independent of each other is an integer of 0 or 1 with the general proviso that g + h is not 0.

3. Chemical compound according to claim 1 having formula (Ib): 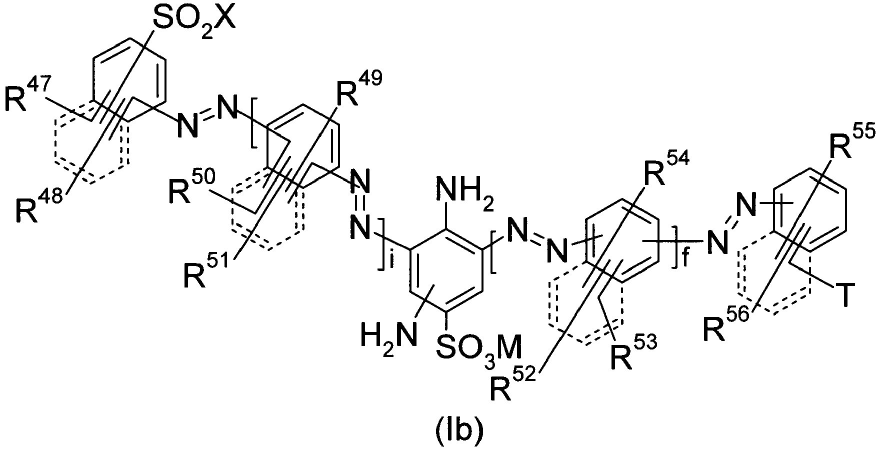 wherein, 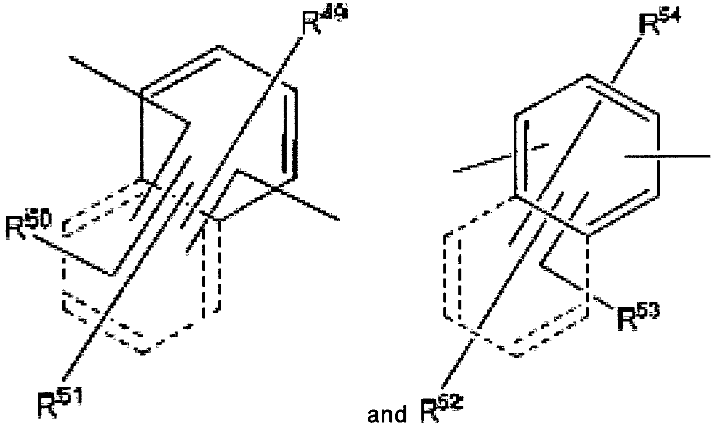 are 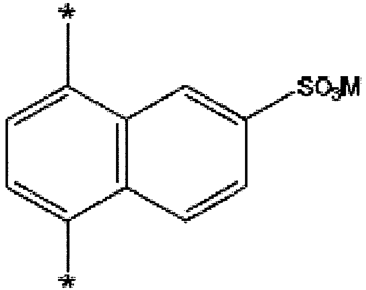
each of R⁴⁷, R⁴⁸, R⁵⁵ and R⁵⁶, independent of each other is hydrogen, halogen, straight-chain or branched alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, unsubstituted or substituted aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy.
T is a rest of general formula (2a) or (2b), where (2a) and (2b) are the same as in claim 1; or
is a group of general formula (9a) 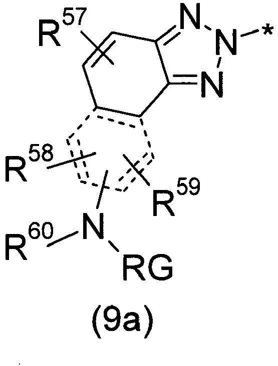
wherein,
each of R⁵⁷ to R⁵⁹, independent of ach other is hydrogen, halogen, straight-chain or branched alkyl, alkoxy or SO₃M; and
R⁶⁰ is hydrogen, straight-chain or branched alkyl, cycloalkyl or unsubstituted or substituted aryl; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
RG, X and M are the same as in claim 1 and
each of i and f, independent of each other is an integer of 0 or 1 with the general proviso that i + f is not 0.

4. Chemical compound according to claim 1 having formula (Id): 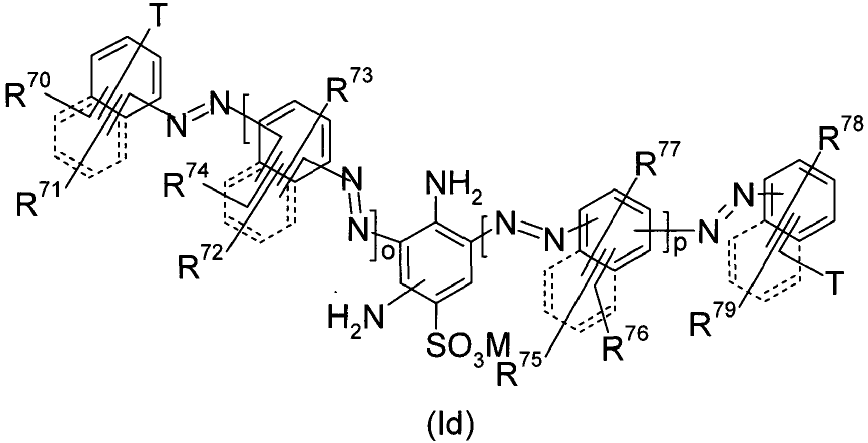 wherein, 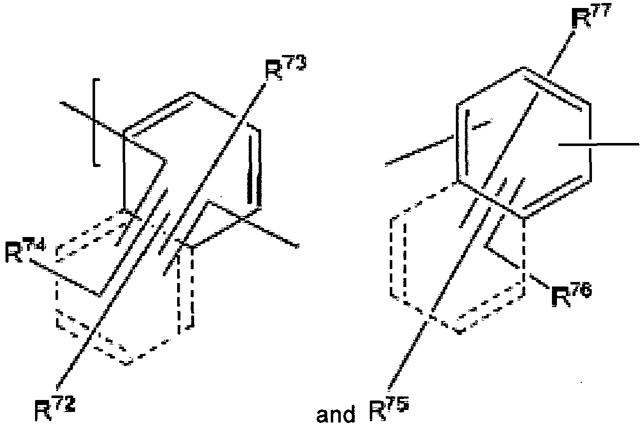 are 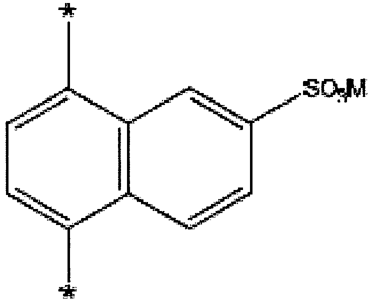
each of R⁷⁰, R⁷¹, R⁷⁸ and R⁷⁹, independent of each other is hydrogen, halogen, straight-chain or branched alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, unsubstituted or substituted aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy,
T is a rest of general formula (2a), (2b) or (9a), where (2a), (2b) and (9a) are the same in claim 1,
M is the same as in claim 1 and
each of o and p, independent of each other is an integer of 0 or 1 with the general proviso that o + p is not 0.

5. Chemical composition consisting of two or more chemical compounds according to any one of claims 1 to 4.

6. Chemical composition comprising one or more chemical compounds according to any one of claims 1 to 4.

7. Aqueous solution for dying comprising one or more chemical compounds according to any one of claims 1 to 4.

8. Process for producing chemical compounds according to claim 1, comprising the steps:
a1) diazotizing A-NH₂ to give a diazonium salt A-N≡N⁺ Counteranion⁻,
a2) optionally coupling the diazonium salt of step a1 with B-NH₂ and diazotizing the resulting compound to give a diazonium salt A-N=N-B-N≡N⁺ Counteranion-, and
b1) diazotizing C-NH₂ to give a diazonium salt C-N≡N⁺ Counteranion-,
b2) optionally coupling the C-diazo-compound of step b1 with D-NH₂ and diazotizing the resulting compound to give a diazonium salt C-N=N-D-N≡N⁺ Counteranion-,
and
c1) coupling of 2,4-diamino-benzene sulfonic acid with the product of step a1 or a2 and
c2) coupling of the product of step c1 with the product of b2 in case the reaction in step c1 was performed with the product of step a1 or
coupling of the product of step c1 with the product of b1 or b2 in case the reaction in step c1 was performed with the product of step a2
or
d1) coupling of 2,4-diamino-benzene sulfonic acid with the product of step b1 or b2 and
d2) coupling of the product of step d1 with the product of a2 in case the reaction in step d1 was performed with the product of step b1 or
coupling of the product of step d1 with the product of a1 or a2 in case the reaction in step d1 was performed with the product of step b2.

9. Use of a chemical compound according to any one of claims 1 to 4, a chemical composition according to claim 5 or 6 or of an aqueous solution according to claim 7 for dying fibers, as well as blends of such fibres selected from the group consisting of: vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers and Lyocell fibers; and synthetic fiber materials, nylon materials, nylon-6, nylon-6.6 and aramid fibres.

10. Fiber and blends containing such fiber selected from the group consisting of: vegetable fibres, seed fibres, cotton, organic cotton, kapok, coir from coconut husk; bast fibers, , flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers and Lyocell fibers; and synthetic fiber materials, nylon materials, nylon-6, nylon-6.6 and aramid fibres comprising one or more chemical compounds according to any one of claims 1 to 4 either in chemically and/or physically bound form.

## Patentansprüche

1. Chemische Verbindung gemäß Formel (I) 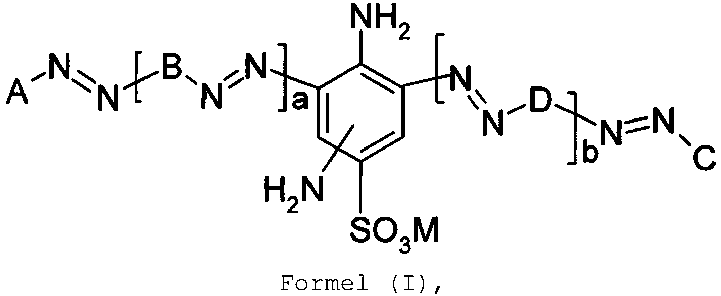 wobei
jedes von A und C unabhängig voneinander ein Rest der allgemeinen Formel (1a) 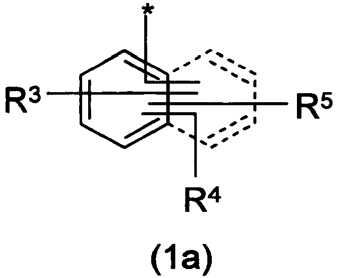
ist, wobei
jeder von R³ bis R⁵ unabhängig voneinander Wasserstoff, ein Halogen, geradkettiges oder verzweigtes Alkyl, N-Acylamino, Alkoxy, Thioalkoxy, Hydroxy, Cyan, Nitro, Alkoxycarbonyl, Alkoxythiocarbonyl, Acyl, Thioacyl, Aryloyl, Trifluormethyl, Acyloxy, Aryloyloxy, Cycloalkyl, unsubstituiertes oder substituiertes Aryl, Heteroaryl, Heterocycloalkyl, N-Cinnamoylamino, SO₃M oder COOM ist; oder
ein Alkyl ist, das durch einen oder mehrere Substituenten substituiert ist, die ausgewählt sind aus der Gruppe bestehend aus Hydroxy, einem Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy; oder
ein Alkyl ist, das durch ein oder mehrere Heteroatome wie Sauerstoff oder Schwefel unterbrochen und durch einen oder mehrere Substituenten substituiert ist, die ausgewählt sind aus der Gruppe bestehend aus Hydroxy, einem Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy; oder
SO₂-X ist, wobei X Vinyl oder ein Rest -CH₂CH₂-Y ist und Y eine unter alkalischen Bedingungen entfernbare Gruppe wie OSO₃M, SSO₃M, OCOCH₃, OPO₃M oder ein Halogen ist; oder
eine Gruppe der allgemeinen Formel (2a), (2b) oder (2c) ist, 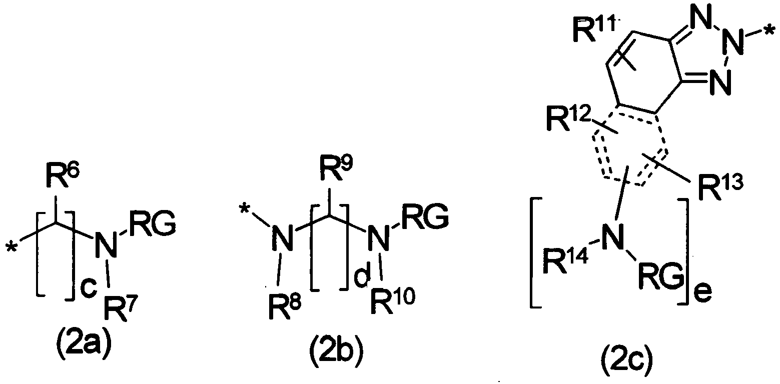
wobei
jeder von R⁶ und R⁹ unabhängig voneinander Wasserstoff, ein Halogen, geradkettiges oder verzweigtes Alkyl, N-Acylamino, Alkoxy, Thioalkoxy, Hydroxy, Cyan, Alkoxycarbonyl, Alkoxythiocarbonyl, Acyl, Thioacyl, Aryloyl, Trifluormethyl, Acyloxy, Aryloyloxy, Cycloalkyl, unsubstituiertes oder substituiertes Aryl, Heteroaryl, Heterocycloalkyl, SO₃M oder COOM ist oder
ein Alkyl ist, das durch einen oder mehrere Substituenten substituiert ist, die ausgewählt sind aus der Gruppe bestehend aus Hydroxy, einem Aryl, Cycloalkyl, Alkoxy, Thioalkoxy, N-Acylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy oder Aryloyloxy; oder
ein Alkyl ist, das durch ein oder mehrere Heteroatome wie Sauerstoff oder Schwefel unterbrochen und durch einen oder mehrere Substituenten substituiert ist, die ausgewählt sind aus der Gruppe bestehend aus Hydroxy, einem Aryl, Cycloalkyl, Alkoxy, Thioalkoxy, N-Acylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy oder Aryloyloxy; und
jeder von R⁷, R⁸, R¹⁰ und R¹⁴ unabhängig voneinander Wasserstoff, ein geradkettiges oder verzweigtes Alkyl, Cycloalkyl oder unsubstituiertes oder substituiertes Aryl ist; oder
ein Alkyl ist, das durch einen oder mehrere Substituenten substituiert ist, die ausgewählt sind aus der Gruppe bestehend aus Hydroxy, einem Aryl, Cycloalkyl, Alkoxy, Thioalkoxy, N-Acylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy oder Aryloyloxy; oder
ein Alkyl ist, das durch ein oder mehrere Heteroatome wie Sauerstoff oder Schwefel unterbrochen und durch einen oder mehrere Substituenten substituiert ist, die ausgewählt sind aus der Gruppe bestehend aus Hydroxy, einem Aryl, Cycloalkyl, Alkoxy, Thioalkoxy, N-Acylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy oder Aryloyloxy; und
jeder von R¹¹ bis R¹³ unabhängig voneinander Wasserstoff, ein Halogen, geradkettiges oder verzweigtes Alkyl, Alkoxy oder SO₃M ist und
c eine ganze Zahl von 0 bis 6 ist und
d eine ganze Zahl von 1 bis 6 ist und,
wenn jedes von c und d unabhängig voneinander ≥ 2 ist, R⁶ und R⁹ verschiedene Bedeutungen innerhalb desselben Rests gemäß der oben definierten Bedeutung aufweisen können; und
e 0 oder 1 ist und
RG ein reaktiver Anker der allgemeinen Formel (3a), (3b) oder (3c) ist; 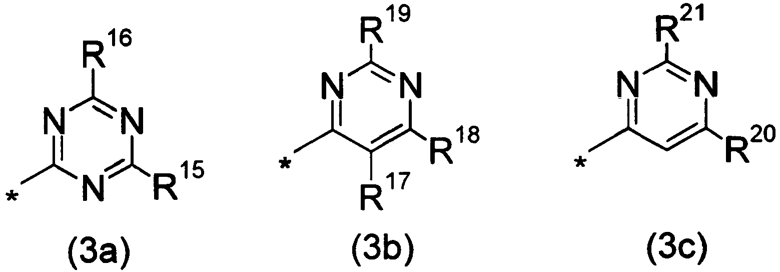
wobei
jeder von R¹⁶ bis R²¹ unabhängig voneinander ein Halogen ist und
R¹⁶ darüber hinaus ein Rest der Formel (4a) sein kann, 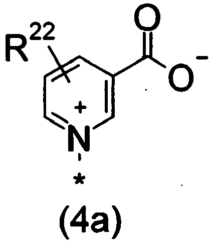
wobei
R²² Wasserstoff, ein Halogen, geradkettiges oder verzweigtes Alkyl, Alkoxy, Thioalkoxy, Hydroxy, Cycloalkyl, unsubstituiertes oder substituiertes Aryl, Heteroaryl, Heterocycloalkyl, SO₃M oder COOM ist; oder
ein Alkyl ist, das durch einen oder mehrere Substituenten substituiert ist, die ausgewählt sind aus der Gruppe bestehend aus Hydroxy, einem Aryl, Cycloalkyl, Alkoxy, Thioalkoxy, N-Acylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy oder Aryloyloxy; oder
ein Alkyl ist, das durch ein oder mehrere Heteroatome wie Sauerstoff oder Schwefel unterbrochen und durch einen oder mehrere Substituenten substituiert ist, die ausgewählt sind aus der Gruppe bestehend aus Hydroxy, einem Aryl, Cycloalkyl, Alkoxy, Thioalkoxy, N-Acylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy oder Aryloyloxy; und
R¹⁵ eine der Gruppen ist, die aus der allgemeinen Formel (5a) oder (5b) ausgewählt sind; 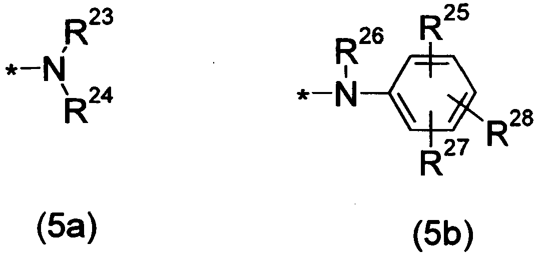
wobei
jeder von R²³, R²⁴ und R²⁶ unabhängig voneinander Wasserstoff, ein geradkettiges oder verzweigtes Alkyl, Cycloalkyl oder unsubstituiertes oder substituiertes Aryl ist; oder
ein Alkyl ist, das durch einen oder mehrere Substituenten substituiert ist, die ausgewählt sind aus der Gruppe bestehend aus Hydroxy, einem Aryl, Cycloalkyl, Alkoxy, Thioalkoxy, N-Acylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy oder Aryloyloxy; oder
ein Alkyl ist, das durch ein oder mehrere Heteroatome wie Sauerstoff oder Schwefel unterbrochen und durch einen oder mehrere Substituenten substituiert ist, die ausgewählt sind aus der Gruppe bestehend aus Hydroxy, einem Aryl, Cycloalkyl, Alkoxy, Thioalkoxy, N-Acylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy oder Aryloyloxy; und
jeder von R²⁵, R²⁷ und R²⁸ unabhängig voneinander Wasserstoff, ein Halogen, geradkettiges oder verzweigtes Alkyl, N-Acylamino, Alkoxy, Thioalkoxy, Hydroxy, Cyan, Alkoxycarbonyl, Alkoxythiocarbonyl, Acyl, Thioacyl, Aryloyl, Sulfamoyl, Trifluormethyl, Acyloxy, Aryloyloxy, Cycloalkyl, unsubstituiertes oder substituiertes Aryl, Heteroaryl, Heterocycloalkyl, SO₃M oder COOM ist oder
ein Alkyl ist, das durch einen oder mehrere Substituenten substituiert ist, die ausgewählt sind aus der Gruppe bestehend aus Hydroxy, einem Aryl, Cycloalkyl, Alkoxy, Thioalkoxy, N-Acylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy oder Aryloyloxy; oder
ein Alkyl ist, das durch ein oder mehrere Heteroatome wie Sauerstoff oder Schwefel unterbrochen und durch einen oder mehrere Substituenten substituiert ist, die ausgewählt sind aus der Gruppe bestehend aus Hydroxy, einem Aryl, Cycloalkyl, Alkoxy, Thioalkoxy, N-Acylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy oder Aryloyloxy; und
R²⁴ darüber hinaus -CH₂CH₂-SO₂-X sein kann, wobei X Vinyl oder ein Rest -CH₂CH₂-Y ist, wobei Y eine unter alkalischen Bedingungen entfernbare Gruppe wie OSO₃M, SSO₃M, OCOCH₃, OPO₃M oder ein Halogen ist; und
R²⁸ darüber hinaus -SO₂-X sein kann, wobei X dasselbe ist, das oben definiert wurde;
jedes von B und D unabhängig voneinander ein Rest der allgemeinen Formel (6a) 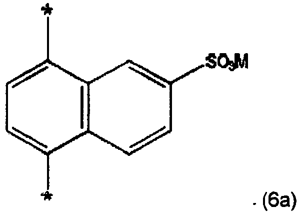
ist, wobei
jedes von a und b unabhängig voneinander eine ganze Zahl, 0 oder 1, mit der allgemeinen Maßgabe ist, dass a + b nicht 0 ist und Farbstoffe der allgemeinen Formel (I) mindestens einen reaktiven Anker enthalten und
M Wasserstoff, Lithium Natrium, Kalium, Ammonium oder ein Mono-, Di-, Tri- oder Tetra-(C₁-C₄)-alkylammonium, ein Äquivalent eines Erdalkalimetalls oder ein einwertiges organisches Kation ist.

2. Chemische Verbindung nach Anspruch 1 mit Formel (Ia): 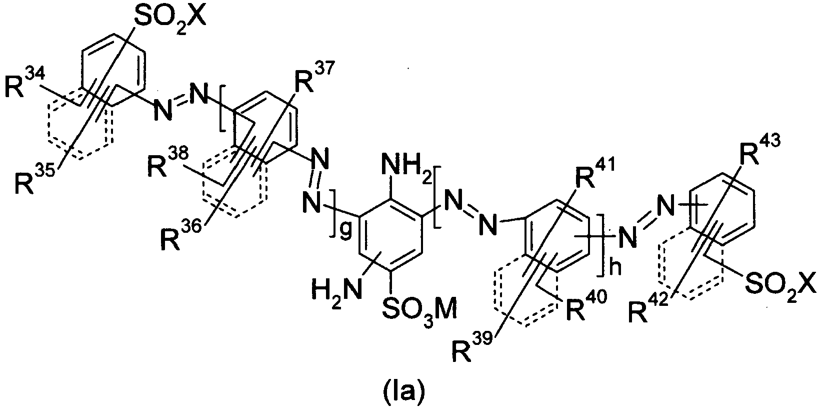 wobei 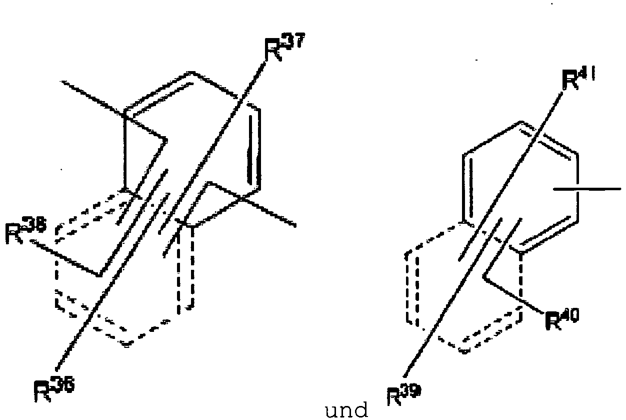 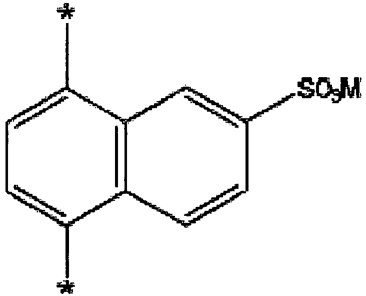
sind, jeder von R³⁴, R³⁵, R⁴² und R⁴³ unabhängig voneinander Wasserstoff, ein Halogen, geradkettiges oder verzweigtes Alkyl, N-Acylamino, Alkoxy, Thioalkoxy, Hydroxy, Cyan, Nitro, Alkoxycarbonyl, Alkoxythiocarbonyl, Acyl, Thioacyl, Aryloyl, Trifluormethyl, Acyloxy, Aryloyloxy, Cycloalkyl, unsubstituiertes oder substituiertes Aryl, Heteroaryl, Heterocycloalkyl, N-Cinnamoylamino, SO₃M oder COOM ist oder
ein Alkyl ist, das durch einen oder mehrere Substituenten substituiert ist, die ausgewählt sind aus der Gruppe bestehend aus Hydroxy, einem Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy; oder
ein Alkyl ist, das durch ein oder mehrere Heteroatome wie Sauerstoff oder Schwefel unterbrochen und durch einen oder mehrere Substituenten substituiert ist, die ausgewählt sind aus der Gruppe bestehend aus Hydroxy, einem Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy,
X und M dieselben wie in Anspruch 1 sind und
jedes von g und h unabhängig voneinander eine ganze Zahl, 0 oder 1, mit der allgemeinen Maßgabe ist, dass g + h nicht 0 ist.

3. Chemische Verbindung nach Anspruch 1 mit Formel (Ib): 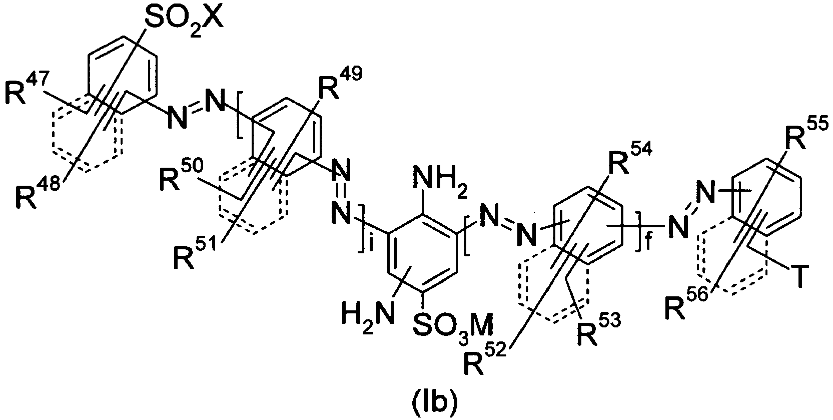 wobei 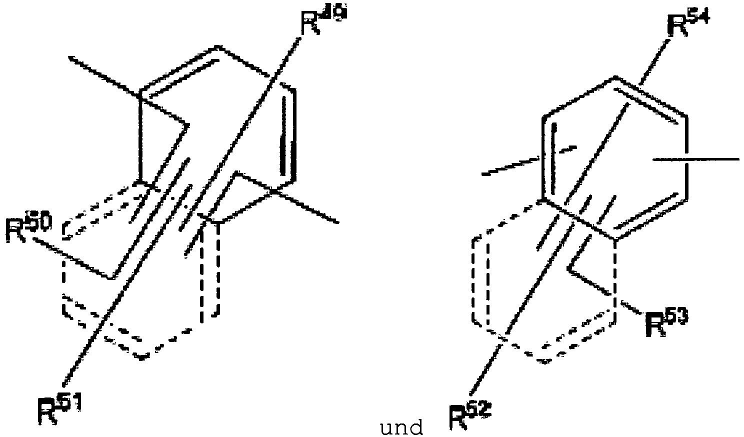 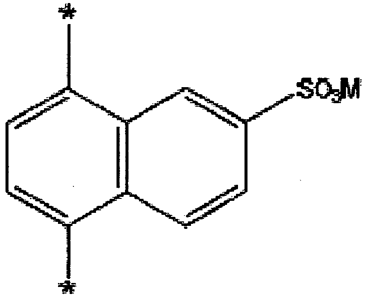
sind, jeder von R⁴⁷, R⁴⁸, R⁵⁵ und R⁵⁶ unabhängig voneinander Wasserstoff, ein Halogen, geradkettiges oder verzweigtes Alkyl, N-Acylamino, Alkoxy, Thioalkoxy, Hydroxy, Cyan, Nitro, Alkoxycarbonyl, Alkoxythiocarbonyl, Acyl, Thioacyl, Aryloyl, Trifluormethyl, Acyloxy, Aryloyloxy, Cycloalkyl, unsubstituiertes oder substituiertes Aryl, Heteroaryl, Heterocycloalkyl, N-Cinnamoylamino, SO₃M oder COOM ist oder
ein Alkyl ist, das durch einen oder mehrere Substituenten substituiert ist, die ausgewählt sind aus der Gruppe bestehend aus Hydroxy, einem Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy; oder
ein Alkyl ist, das durch ein oder mehrere Heteroatome wie Sauerstoff oder Schwefel unterbrochen und durch einen oder mehrere Substituenten substituiert ist, die ausgewählt sind aus der Gruppe bestehend aus Hydroxy, einem Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy,
T ein Rest der allgemeinen Formel (2a) oder (2b) ist, wobei (2a) und (2b) dieselben wie in Anspruch 1 sind; oder
eine Gruppe der allgemeinen Formel (9a) ist, 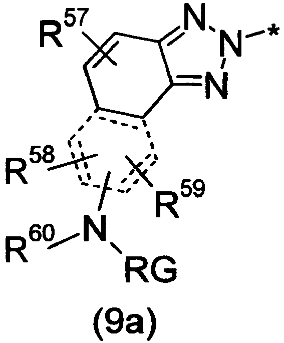
wobei
jeder von R⁵⁷ bis R⁵⁹ unabhängig voneinander Wasserstoff, ein Halogen, geradkettiges oder verzweigtes Alkyl, Alkoxy oder SO₃M ist und
R⁶⁰ Wasserstoff, ein geradkettiges oder verzweigtes Alkyl, Cycloalkyl oder unsubstituiertes oder substituiertes Aryl ist; oder
ein Alkyl ist, das durch einen oder mehrere Substituenten substituiert ist, die ausgewählt sind aus der Gruppe bestehend aus Hydroxy, einem Aryl, Cycloalkyl, Alkoxy, Thioalkoxy, N-Acylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy oder Aryloyloxy; oder
ein Alkyl ist, das durch ein oder mehrere Heteroatome wie Sauerstoff oder Schwefel unterbrochen und durch einen oder mehrere Substituenten substituiert ist, die ausgewählt sind aus der Gruppe bestehend aus Hydroxy, einem Aryl, Cycloalkyl, Alkoxy, Thioalkoxy, N-Acylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy oder Aryloyloxy; und
RG, X und M dieselben wie in Anspruch 1 sind und
jedes von i und f unabhängig voneinander eine ganze Zahl, 0 oder 1, mit der allgemeinen Maßgabe ist, dass i + f nicht 0 ist.

4. Chemische Verbindung nach Anspruch 1 mit Formel (Id): 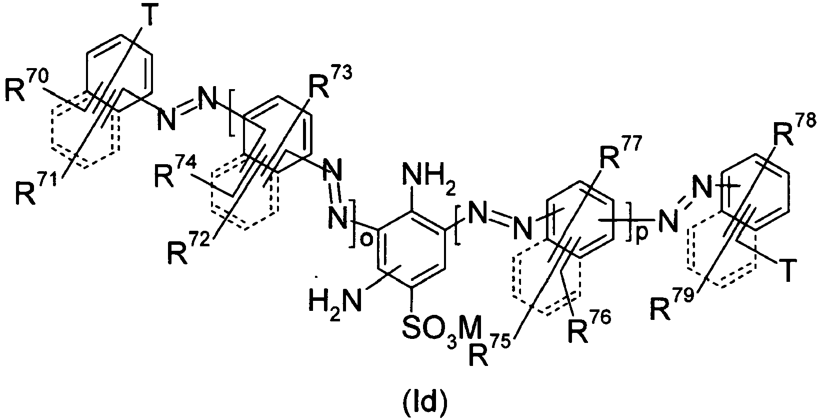 wobei 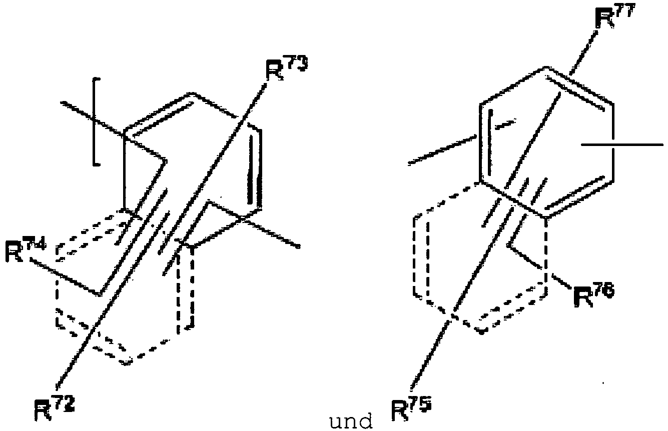 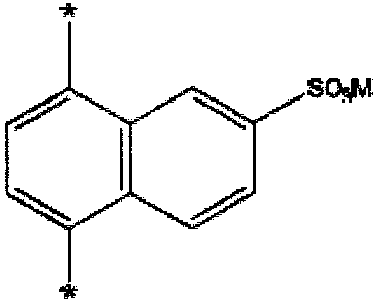
sind, jeder von R⁷⁰, R⁷¹, R⁷⁸ und R⁷⁹ unabhängig voneinander Wasserstoff, ein Halogen, geradkettiges oder verzweigtes Alkyl, N-Acylamino, Alkoxy, Thioalkoxy, Hydroxy, Cyan, Nitro, Alkoxycarbonyl, Alkoxythiocarbonyl, Acyl, Thioacyl, Aryloyl, Trifluormethyl, Acyloxy, Aryloyloxy, Cycloalkyl, unsubstituiertes oder substituiertes Aryl, Heteroaryl, Heterocycloalkyl, N-Cinnamoylamino, SO₃M oder COOM ist oder
ein Alkyl ist, das durch einen oder mehrere Substituenten substituiert ist, die ausgewählt sind aus der Gruppe bestehend aus Hydroxy, einem Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy; oder
ein Alkyl ist, das durch ein oder mehrere Heteroatome wie Sauerstoff oder Schwefel unterbrochen und durch einen oder mehrere Substituenten substituiert ist, die ausgewählt sind aus der Gruppe bestehend aus Hydroxy, einem Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyan, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy,
T ein Rest der allgemeinen Formel (2a), (2b) oder (9a) ist, wobei (2a), (2b) und (9a) dieselben wie in Anspruch 1 sind,
M dasselbe wie in Anspruch 1 ist und
jedes von o und p unabhängig voneinander eine ganze Zahl, 0 oder 1, mit der allgemeinen Maßgabe ist, dass o + p nicht 0 ist.

5. Chemische Zusammensetzung, die aus zwei oder mehr chemischen Verbindungen nach einem der Ansprüche 1 bis 4 besteht.

6. Chemische Zusammensetzung, die eine oder mehr chemischen Verbindungen nach einem der Ansprüche 1 bis 4 umfasst.

7. Wässrige Lösung zum Färben, die eine oder mehr chemischen Verbindungen nach einem der Ansprüche 1 bis 4 umfasst.

8. Verfahren zur Herstellung von chemischen Verbindungen nach Anspruch 1, das die folgenden Schritte umfasst:
a1) das Diazotieren von A-NH₂, wodurch ein Diazoniumsalz A-N≡N⁺ Gegenanion- erhalten wird,
a2) gegebenenfalls das Koppeln des Diazoniumsalzes von Schritt a1 mit B-NH₂ und das Diazotieren der resultierenden Verbindung, wodurch ein Diazoniumsalz AN=N-B-N≡N⁺ Gegenanion- erhalten wird,
und
b1) das Diazotieren von C-NH₂, wodurch ein Diazoniumsalz C-N≡N⁺ Gegenanion- erhalten wird,
b2) gegebenenfalls das Koppeln der C-Diazoverbindung von Schritt b1 mit D-NH₂ und das Diazotieren der resultierenden Verbindung, wodurch ein Diazoniumsalz C-N=N-D-N≡N⁺ Gegenanion- erhalten wird,
und
c1) das Koppeln von 2,4-Diaminobenzolsulfonsäure mit dem Produkt von Schritt a1 oder a2 und
c2) das Koppeln des Produkts von Schritt c1 mit dem Produkt von b2 in demjenigen Fall, in dem die Reaktion in Schritt c1 mit dem Produkt von Schritt a1 durchgeführt wurde, oder
das Koppeln des Produkts von Schritt c1 mit dem Produkt von b1 oder b2 in demjenigen Fall, in dem die Reaktion in Schritt c1 mit dem Produkt von Schritt a2 durchgeführt wurde,
oder
d1) das Koppeln von 2,4-Diaminobenzolsulfonsäure mit dem Produkt von Schritt b1 oder b2 und
d2) das Koppeln des Produkts von Schritt d1 mit dem Produkt von a2 in demjenigen Fall, in dem die Reaktion in Schritt d1 mit dem Produkt von Schritt b1 durchgeführt wurde, oder
das Koppeln des Produkts von Schritt d1 mit dem Produkt von a1 oder a2 in demjenigen Fall, in dem die Reaktion in Schritt d1 mit dem Produkt von Schritt b2 durchgeführt wurde.

9. Verwendung einer chemischen Verbindung nach einem der Ansprüche 1 bis 4, einer chemischen Zusammensetzung nach Anspruch 5 oder 6 oder einer wässrigen Lösung nach Anspruch 7 zum Färben von Fasern sowie von Mischungen solcher Fasern, die ausgewählt sind aus der Gruppe bestehend aus: pflanzlichen Fasern, Samenfasern, Baumwolle, Bio-Baumwolle, Kapok, Kokosfasern von Kokosnuss-Schalen; Bastfasern, Flachs, Hanf, Jute, Kenaf, Ramie, Rattan; Blattfasern, Sisal, Henequen, Banane; Stängelfasern, Bambus; Fasern von Tieren, Wolle, Bio-Wolle, Seide, Kaschmirwolle, Alpakafaser, Mohair, Angorafaser sowie Fell- und Ledermaterialien; hergestellten, regenerierten und recycelten Fasern, Cellulosefasern; Papierfasern; regenerierten Cellulosefasern, Viskose-Rayon-Fasern, Acetat- und Triacetatfasern und Lyocell-Fasern und syntetischen Fasermaterialien, Nylonmaterialien, Nylon-6, Nylon-6.6 und Aramidfasern.

10. Faser und eine solche Faser enthaltende Mischungen, die ausgewählt sind aus der Gruppe bestehend aus: pflanzlichen Fasern, Samenfasern, Baumwolle, Bio-Baumwolle, Kapok, Kokosfasern von Kokosnuss-Schalen; Bastfasern, Flachs, Hanf, Jute, Kenaf, Ramie, Rattan; Blattfasern, Sisal, Henequen, Banane; Stängelfasern, Bambus; Fasern von Tieren, Wolle, Bio-Wolle, Seide, Kaschmirwolle, Alpakafaser, Mohair, Angorafaser sowie Fell- und Ledermaterialien; hergestellten, regenerierten und recycelten Fasern, Cellulosefasern; Papierfasern; regenerierten Cellulosefasern, Viskose-Rayon-Fasern, Acetat- und Triacetatfasern und Lyocell-Fasern und syntetischen Fasermaterialien, Nylonmaterialien, Nylon-6, Nylon-6.6 und Aramidfasern, die eine oder mehrere chemische Verbindungen nach einem der Ansprüche 1 bis 4 entweder in chemisch und/oder physisch gebundener Form umfassen.

## Revendications

1. Composé chimique selon la formule (I) 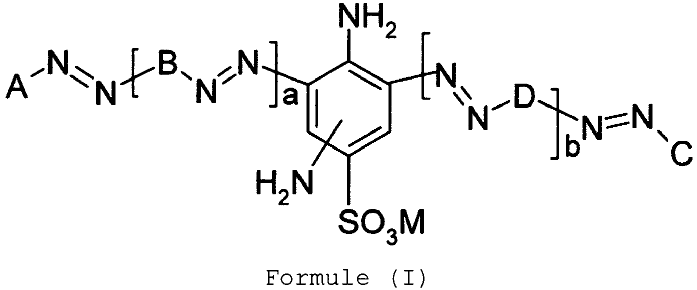 dans lequel,
chacun de A et C, indépendamment l'un de l'autre, est un radical de formule générale (1a) 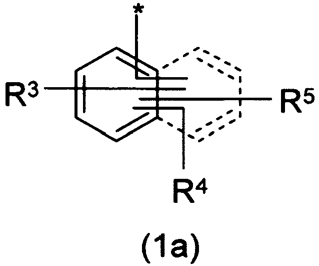
dans lequel,
chacun de R³ à R⁵, indépendamment les uns des autres, est hydrogène, halogène, alkyle à chaîne linéaire ou ramifié, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle non substitué ou substitué, hétéroaryle, hétérocycloalkyle, N-cinnamoylamino, SO₃M ou COOM ; ou
est alkyle substitué par un ou plusieurs substituants choisis dans le groupe constitué d'hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels que l'oxygène ou le soufre et substitué par un ou plusieurs substituants choisis dans le groupe constitué d'hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est SO₂-X, où X est vinyle ou un radical -CH₂CH₂-Y et Y est un groupe labile dans des conditions alcalines tel que OSO₃M, SSO₃M, OCOCH₃, OPO₃M ou halogène ; ou
est un groupe de formule générale (2a), (2b) ou (2c) 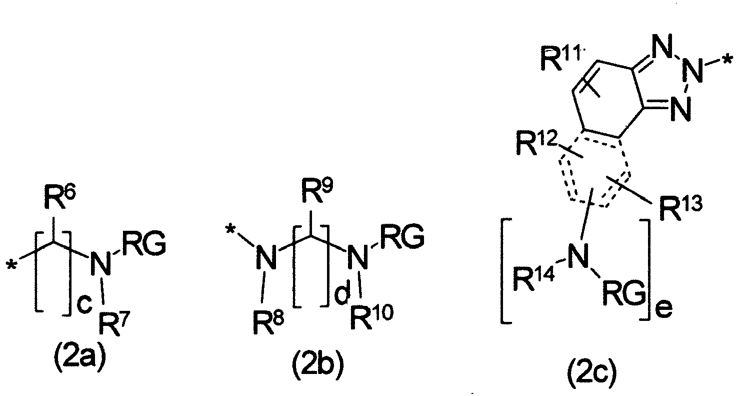
dans lequel,
chacun de R⁶ et R⁹, indépendamment l'un de l'autre, est hydrogène, halogène, alkyle à chaîne linéaire ou ramifié, N-acylamino, alcoxy, thioalcoxy, hydroxy, cyano, alcoxycarbonyle, alcoxythiocarbonyle, acyle, thioacyle, aryloyle, trifluorométhyle, acyloxy, aryloyloxy, cycloalkyle, aryle non substitué ou substitué, hétéroaryle, hétérocycloalkyle, SO₃M ou COOM ; ou
est alkyle substitué par un ou plusieurs substituants choisis dans le groupe constitué d'hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels que l'oxygène ou le soufre et substitué par un ou plusieurs substituants choisis dans le groupe constitué d'hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
chacun de R⁷, R⁸, R¹⁰ et R¹⁴, indépendamment les uns des autres, est hydrogène, alkyle à chaîne linéaire ou ramifié, cycloalkyle ou aryle non substitué ou substitué ; ou
est alkyle substitué par un ou plusieurs substituants choisis dans le groupe constitué d'hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels que l'oxygène ou le soufre et substitué par un ou plusieurs substituants choisis dans le groupe constitué d'hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
chacun de R¹¹ à R¹³, indépendamment les uns des autres, est hydrogène, halogène, alkyle à chaîne linéaire ou ramifié, alcoxy ou SO₃M ; et
c est un entier de 0 à 6 ; et
d est un entier de 1 à 6 ; et
lorsque chacun de c et d, indépendamment l'un de l'autre, est > 2, R⁶ et R⁹ peuvent avoir des significations différentes dans le même résidu conformément à la signification définie ci-dessus ; et
e est 0 ou 1 ; et
RG est un ancrage réactif de formule générale (3a), (3b) ou (3c) ; 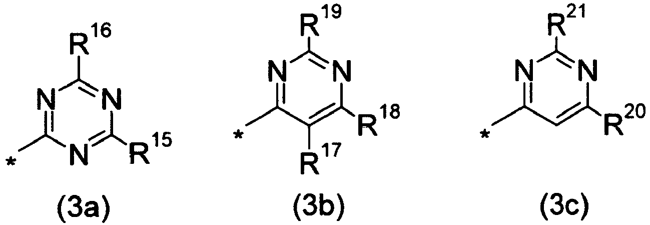
dans lequel,
chacun de R¹⁶ à R²¹, indépendamment les uns des autres, est halogène ; et
R¹⁶ peut en outre être un résidu de formule (4a) 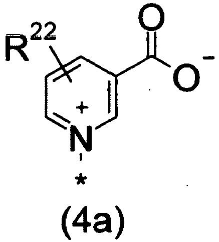
dans lequel,
R²² est hydrogène, halogène, alkyle à chaîne linéaire ou ramifié, alcoxy, thioalcoxy, hydroxy, cycloalkyle, aryle non substitué ou substitué, hétéroaryle, hétérocycloalkyle, SO₃M ou COOM ; ou
est alkyle substitué par un ou plusieurs substituants choisis dans le groupe constitué d'hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels que l'oxygène ou le soufre et substitué par un ou plusieurs substituants choisis dans le groupe constitué d'hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
R¹⁵ est un des groupes choisis parmi la formule générale (5a) ou (5b) ; 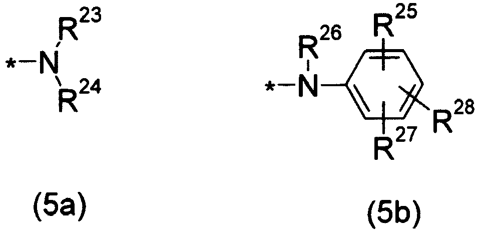
dans lesquels,
chacun de R²³, R²⁴ et R²⁶, indépendamment les uns des autres, est hydrogène, alkyle à chaîne linéaire ou ramifié, cycloalkyle ou aryle non substitué ou substitué ; ou
est alkyle substitué par un ou plusieurs substituants choisis dans le groupe constitué d'hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels que l'oxygène ou le soufre et substitué par un ou plusieurs substituants choisis dans le groupe constitué d'hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
chacun de R²⁵, R²⁷ et R²⁸, indépendamment les uns des autres, est hydrogène, halogène, alkyle à chaîne linéaire ou ramifié, N-acylamino, alcoxy, thioalcoxy, hydroxy, cyano, alcoxycarbonyle, alcoxythiocarbonyle, acyle, thioacyle, aryloyle, sulfamoyle, trifluorométhyle, acyloxy, aryloyloxy, cycloalkyle, aryle non substitué ou substitué, hétéroaryle, hétérocycloalkyle, SO₃M ou COOM ; ou
est alkyle substitué par un ou plusieurs substituants choisis dans le groupe constitué d'hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels que l'oxygène ou le soufre et substitué par un ou plusieurs substituants choisis dans le groupe constitué d'hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
R²⁴ peut en outre être -CH₂CH₂-SO₂-X, où X est vinyle ou un radical -CH₂CH₂-Y où Y est un groupe labile dans des conditions alcalines tel que OSO₃M, SSO₃M, OCOCH₃, OPO₃M ou halogène ; et
R²⁸ peut en outre être -SO₂-X où X est tel que défini ci-dessus ;
chacun de B et D, indépendamment l'un de l'autre, est un radical de formule générale (6a) 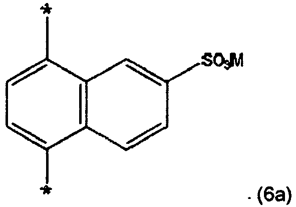
dans lequel,
chacun de a et b, indépendamment l'un de l'autre, est un entier de 0 ou 1 à la condition générale que a + b ne soit pas 0 et les colorants de formule générale (I) contiennent au moins un ancrage réactif et
M est hydrogène, lithium, sodium, potassium, ammonium ou mono-, di-, tri- ou tetra-(alkyle en C₁-C₄) ammonium, un équivalent d'un métal alcalino-terreux, ou un cation organique monovalent.

2. Composé chimique selon la revendication 1 ayant la formule (Ia) : 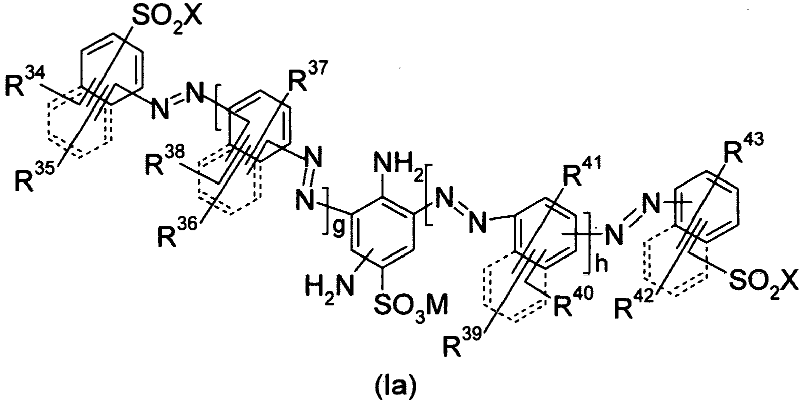 dans lequel, 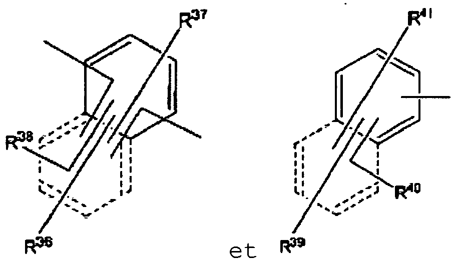 sont 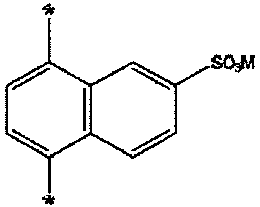
chacun de R³⁴, R³⁵, R⁴² et R⁴³, indépendamment les uns des autres, est hydrogène, halogène, alkyle à chaîne linéaire ou ramifié, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle non substitué ou substitué, hétéroaryle, hétérocycloalkyle, N-cinnamoylamino, SO₃M ou COOM ; ou
est alkyle substitué par un ou plusieurs substituants choisis dans le groupe constitué d'hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels que l'oxygène ou le soufre et substitué par un ou plusieurs substituants choisis dans le groupe constitué d'hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ;
X et M sont tels que définis dans la revendication 1 et chacun de g et h, indépendamment l'un de l'autre, est un entier de 0 ou 1 à la condition générale que g + h ne soit pas 0.

3. Composé chimique selon la revendication 1 ayant la formule (Ib) : 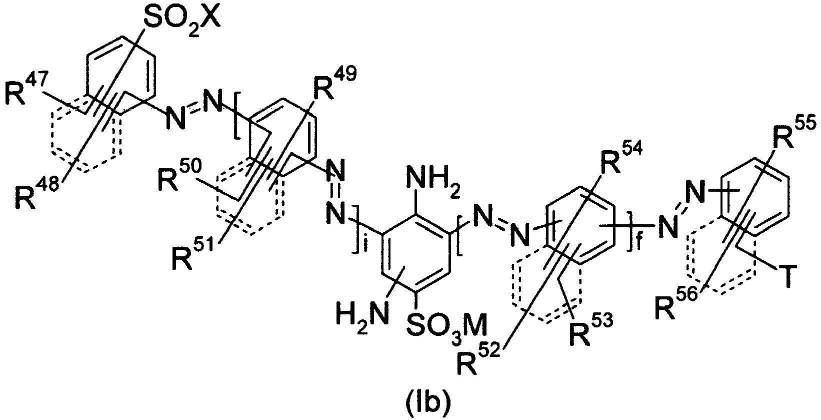 dans lequel, 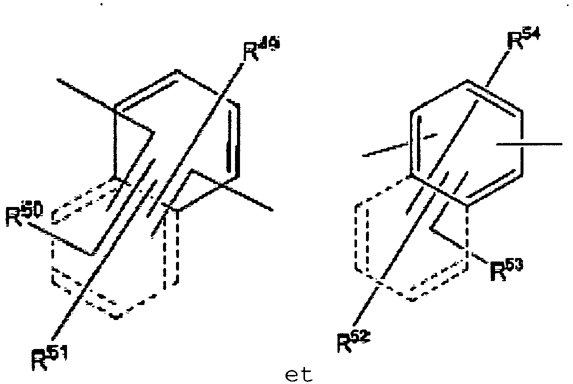 sont 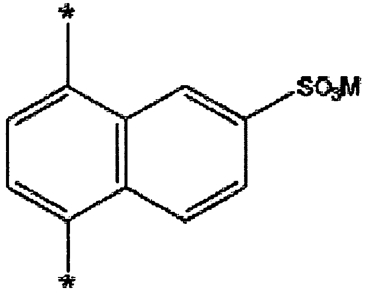
chacun de R⁴⁷, R⁴⁸, R⁵⁵ et R⁵⁶, indépendamment les uns des autres, est hydrogène, halogène, alkyle à chaîne linéaire ou ramifié, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle non substitué ou substitué, hétéroaryle, hétérocycloalkyle, N-cinnamoylamino, SO₃M ou COOM ; ou
est alkyle substitué par un ou plusieurs substituants choisis dans le groupe constitué d'hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels que l'oxygène ou le soufre et substitué par un ou plusieurs substituants choisis dans le groupe constitué d'hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ;
T est un résidu de formule générale (2a) ou (2b), où (2a) et (2b) sont tels que définis dans la revendication 1 ; ou
est un groupe de formule générale (9a) 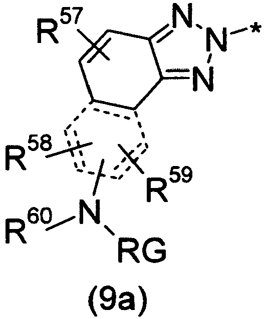
dans lequel,
chacun de R⁵⁷ à R⁵⁹, indépendamment les uns des autres, est hydrogène, halogène, alkyle à chaîne linéaire ou ramifié, alcoxy ou SO₃M ; et
R⁶⁰ est hydrogène, alkyle à chaîne linéaire ou ramifié, cycloalkyle ou aryle non substitué ou substitué ; ou est alkyle substitué par un ou plusieurs substituants choisis dans le groupe constitué d'hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels que l'oxygène ou le soufre et substitué par un ou plusieurs substituants choisis dans le groupe constitué d'hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
RG, X et M sont tels que définis dans la revendication 1 et
chacun de i et f, indépendamment l'un de l'autre, est un entier de 0 ou 1 à la condition générale que i + f ne soit pas 0.

4. Composé chimique selon la revendication 1 ayant la formule (Id) : 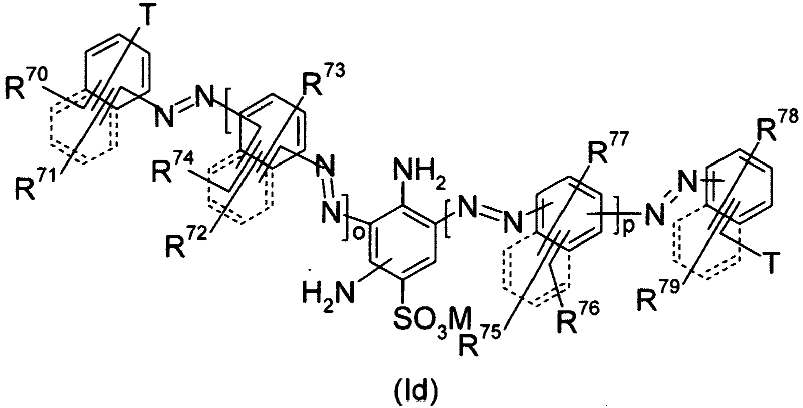 dans lequel, 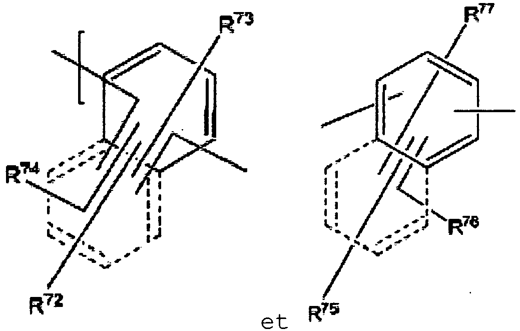 sont 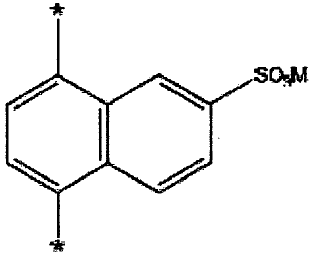
chacun de R⁷⁰, R⁷¹, R⁷⁸ et R⁷⁹, indépendamment les uns des autres, est hydrogène, halogène, alkyle à chaîne linéaire ou ramifié, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle non substitué ou substitué, hétéroaryle, hétérocycloalkyle, N-cinnamoylamino, SO₃M ou COOM ; ou
est alkyle substitué par un ou plusieurs substituants choisis dans le groupe constitué d'hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels que l'oxygène ou le soufre et substitué par un ou plusieurs substituants choisis dans le groupe constitué d'hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy,
T est un résidu de formule générale (2a), (2b) ou (9a), où (2a), (2b) et (9a) sont tels que définis dans la revendication 1,
M est tel que défini dans la revendication 1 et
chacun de o et p, indépendamment l'un de l'autre, est un entier de 0 ou 1 à la condition générale que o + p ne soit pas 0.

5. Composition chimique constituée de deux ou plus de deux composés chimiques selon l'une quelconque des revendications 1 à 4.

6. Composition chimique comprenant un ou plusieurs composés chimiques selon l'une quelconque des revendications 1 à 4.

7. Solution aqueuse pour coloration comprenant un ou plusieurs composés chimiques selon l'une quelconque des revendications 1 à 4.

8. Procédé de production de composés chimiques selon la revendication 1, comprenant les étapes de :
a1) diazotation de A-NH₂ pour produire un sel de diazonium A-N≡N⁺ contre-anion-,
a2) facultativement couplage du sel de diazonium de l'étape a1 avec B-NH₂ et diazotation du composé résultant pour produire un sel de diazonium A-N=N-B-N≡N⁺ contre-anion-, et
b1) diazotation de C-NH₂ pour produire un sel de diazonium C-N≡N⁺ contre-anion-,
b2) facultativement couplage du composé C-diazo de l'étape b1 avec D-NH₂ et diazotation du composé résultant pour produire un sel de diazonium C-N=N-D-N≡N⁺ contre-anion-, et
c1) couplage d'acide 2,4-diamino-benzènesulfonique avec le produit de l'étape a1 ou a2 et
c2) couplage du produit de l'étape c1 avec le produit de b2 dans le cas où la réaction dans l'étape c1 est effectuée avec le produit de l'étape a1 ou
couplage du produit de l'étape c1 avec le produit de b1 ou b2 dans le cas où la réaction dans l'étape c1 est effectuée avec le produit de l'étape a2 ou
d1) couplage d'acide 2,4-diamino-benzènesulfonique avec le produit de l'étape b1 ou b2 et
d2) couplage du produit de l'étape d1 avec le produit de a2 dans le cas où la réaction dans l'étape d1 est effectuée avec le produit de l'étape b1 ou couplage du produit de l'étape d1 avec le produit de a1 ou a2 dans le cas où la réaction dans l'étape d1 est effectuée avec le produit de l'étape b2.

9. Utilisation d'un composé chimique selon l'une quelconque des revendications 1 à 4, composition chimique selon la revendication 5 ou 6 ou d'une solution aqueuse selon la revendication 7 pour colorer des fibres, ainsi que des mélanges de telles fibres choisies dans le groupe constitué de : fibres végétales, fibres de graines, coton, coton organique, kapok, corde de coque de noix de coco ; fibres de raphia, lin, chanvre, jute, kénaf, ramie, rotin ; fibres de feuilles, sisal, henequen, banane ; fibres de tige, bambou ; fibres d'origine animale, laine, laine organique, soie, laine de cachemire, fibre d'alpaga, mohair, fibre d'angora ainsi que matériaux de fourrure et de cuir ; fibres manufacturées, régénérées et recyclées, fibres cellulosiques ; fibres de papier, fibres cellulosiques régénérées, fibres de rayonne viscose, fibres d'acétate et triacétate et fibres Lyocell ; et matériaux de fibres synthétiques, matériaux en nylon, nylon-6, nylon-6,6 et fibres d'aramide.

10. Fibre et mélanges contenant une telle fibre choisis dans le groupe constitué de : fibres végétales, fibres de graines, coton, coton organique, kapok, corde de coque de noix de coco ; fibres de raphia, lin, chanvre, jute, kénaf, ramie, rotin ; fibres de feuilles, sisal, henequen, banane ; fibres de tige, bambou ; fibres d'origine animale, laine, laine organique, soie, laine de cachemire, fibre d'alpaga, mohair, fibre d'angora ainsi que matériaux de fourrure et de cuir ; fibres manufacturées, régénérées et recyclées, fibres cellulosiques ; fibres de papier, fibres cellulosiques régénérées, fibres de rayonne viscose, fibres d'acétate et triacétate et fibres Lyocell ; et matériaux de fibres synthétiques, matériaux en nylon, nylon-6, nylon-6,6 et fibres d'aramide comprenant un ou plusieurs composés chimiques selon l'une quelconque des revendications 1 à 4 sous forme chimiquement et/ou physiquement liée.
